(19) **Europäisches Patentamt**

**European Patent Office**

**Office européen des brevets**

(11) **EP 1 315 086 B1**

(12) **EUROPEAN PATENT SPECIFICATION**

(45) Date of publication and mention
of the grant of the patent:
**05.07.2006 Bulletin 2006/27**

(51) Int Cl.:
***G06F 9/44*** *(2006.01)*

(21) Application number: **02010133.3**

(22) Date of filing: **10.05.2002**

(54) **Generation of localized software applications**

Erzeugung lokalisierter Softwareanwendungen

Generation de logiciels d'applications localisées

(84) Designated Contracting States:
**GB**

(30) Priority: **27.11.2001 EP 01128179**

(43) Date of publication of application:
**28.05.2003 Bulletin 2003/22**

(73) Proprietor: **SUN MICROSYSTEMS, INC.**
**Palo Alto, California 94303 (US)**

(72) Inventor: **Fuhrmann, Nils**
**21385 Amelinghausen (DE)**

(74) Representative: **HOFFMANN EITLE**
**Patent- und Rechtsanwälte**
**Arabellastrasse 4**
**81925 München (DE)**

(56) References cited:
**EP-A- 0 668 558**        **EP-A- 1 100 004**
**US-A- 5 434 776**        **US-A- 5 678 039**

- **DONALD A. LEWINE: "POSIX Programmer's**
  **Guide (pages 193-206)" March 1994 (1994-03),**
  **O'REILLY & ASSOCIATES, USA XP002234910**
  **ISBN: 0-937175-73-0 * page 199 - page 200 * * page**
  **206 ***

**Description**

<u>FIELD OF THE INVENTION</u>

The present invention relates to a method and processing unit for providing localized version of a software application having text elements, e.g. for presentation to a user.

<u>BACKGROUND OF THE INVENTION</u>

With continuously increasing processing capabilities of computing devices and increased proliferation of computers in offices and homes, computers became valuable assistants in nearly all application environments. For example, computers are widely used for office applications, imaging or video processing applications, personal communication applications, purchasing or sales applications, information service applications and similar.

Data processing devices for any of the above or other applications may include virtually any kind of computing devices such as multi-purpose data processing devices including desktop or personal computers, lap top, palm top computing devices, personal digital assistants (PDA), mobile communication devices such as mobile telephones or mobile communicators, etc.

Further, a growing number of the above applications today involve communication networks linking a plurality of data processing devices. The individual data processing devices may be at arbitrary locations. Thus, a data processing device involved in providing a service, e.g. a server maintaining data which can be accessed through a communication network, may be located at a first location, while another data processing device obtaining a service, e.g. a client operated by a user for accessing and manipulating the data, may be located at a second, remote location.

A server unit, i.e. a data processing device providing a service, may be arranged for access from a plurality of client units. For example, a server application may allow users at any location and from virtually any data processing device to access personal data maintained at a server or a network of server units.

For example, a user operating a client unit could connect to a server unit or network of server units using personal identification information, and input commands to access data maintained at the server unit or the network of server units. This may be email, a text document, images or any other kind of information. As another example, a user could also access a server unit in a company wide local area network, and input commands to access, retrieve or manipulate data of his workgroup or similar. The server unit would in turn provide desired information for display at the client unit.

This exchange of information between client unit and server unit will be enabled by a corresponding software application for access and/or control of data at the server unit, i.e. one of the above outlined exemplary applications. A text document could be accessed through a text processing application; an email could be accessed through an email application, etc.

To maintain privacy and enable an individual control of the application each user will suitably launch an instance of a service application at a server unit and control execution through the client unit, e.g. by selecting menu options using a mouse and cursor, by entering commands through a keyboard, etc.

The service application at the server unit may be run in connection with or constitute at least part of an operating system involving elements located at the server unit and the client unit.

In any of the above exemplary cases, information will have to be displayed or presented by other means to a user operating the data processing device/client unit. This may include the display of a desktop screen with menu information, the presentation of message strings or notifications during the execution of an application and any other kind of dialogue or information allowing the selection and manipulation of data and the selection and execution control of the service application.

As an example, a text processing application may involve displaying a frame on a screen including command buttons, a region for displaying a text document, a region for displaying status information or any other kind of information. Still further, during the execution of the text processing application, it may be necessary to inform a user regarding certain states of the data processing device, the application or of the accessed data. During storing operations of data, a user may be e.g. prompted to make a selection of a format for storing the data, a storage location and/or may be notified regarding a status of a storage device, etc.

Information for controlling execution of the application or notification information can be displayed for example using image buttons containing text information. This text information may provide information on a specific function that can be activated when selecting the image button. A selection of the image button may effected by clicking on the image button using a mouse and cursor device or any other means.

In any of the above examples, i.e. whether the service application is executed on a stand alone data processing device or on a plurality of data processing devices, e.g. in a client and server environment, it likely is the case that users are located in different language areas or have different language preferences.

Text information to be displayed to a user at a client unit should be therefore be provided in a language understood or preferred by each individual user. The same applies, if an application program is to be offered in different language areas or should allow different language preferences, selectable by a user, e.g. upon installation of the application program on a stand alone data processing device.

As a straight forward approach to provide different versions of an application program with menu items, interaction information, dialog information and control information or similar displayed in different languages, different versions of the code of the service application could be provided, with the individual text elements in various languages to accommodate users in different language areas or with different language preferences.

This approach, however, requires that different versions of a code of the application with text elements in different languages need to be maintained. After compilation executable of the application program with text elements in different languages and/or with language dependent appearance would then be available. While this approach may be feasible in connection with smaller application programs, maintaining different versions of larger applications or applications having a large number of components, e.g. an operating system or a large service application, may require considerable resources. Especially, as applications generally are subject to constant development with new versions to be released to accommodate improvements and/or new functionality, a set of localized versions of the code of the software application must be generated with each modification. For example, if a service application should be operable in 20 language environments, 20 versions of the code must be maintained.

US 5,678,039 A (D1) describes a software translation method for translating software into localized versions. A software translation is accomplished by extracting translatable strings from sources, translating them into local language and reinserting them back to the original sources for recompilation and linking.

More precisely, an export/import module is described to process a resource file into a translation table, which may be stored as a data base table. The translation table includes all information that is known or can be derived from various sources, i.e. the translatable strings, and stores them in a format for utilization by various editors. According to the statement of claims of D1, a translatable item including local dependent text strings of resources from a software program are extracted and stored in a translation table. The translation table is for assisting with translating a local dependent text string to a new text string for a particular local and inputting a new dimension of a resource of the extracted translatable item. The software program is then translated by translating at least one of the text strings of the extracted translatable items to a new text string for the particular local while at the same time indicating to a user how said new text string will appear in the user interface of the translated version, so that the new dimension may be entered by the user.

Donald A. Lewine:"POSIX Programmer's Guide" (D2) describes aspects of the C programming language and the UNIX system for internationalization. A mechanism for language-independent message consists of a file external to the actual code that can be translated to provide messages in other languages. A message identifier is used to lock up the message in a catalogue.

## SUMMARY OF THE INVENTION

It is therefore desirable to provide localized versions of software application with improved efficiency.

According to an embodiment of the invention, a method for providing localized versions of a software application with text elements may comprise: accessing a code of the software application associated with a plurality of text elements in a first language; obtaining translations of the text elements in a second language; associating the text elements in the second language with the code; and effecting provision of a first localized version of the software application for the first language and a second localized version of the software application for the second language based on the code associated with the text elements in the first and second language. Accordingly, a single code version associated with the text elements in the different languages may be employed to provide different localized versions of the software application. This eliminates the need to maintain the code in different language dependent versions.

Advantageously, the text elements may be provided at specified positions within a code file including the code, and the translated text elements in the second language may be merged into the code file at the positions of the corresponding text elements in the first language. Accordingly, a single version of the code may be maintained and directly include the text elements in different languages.

Alternatively or further thereto, the text elements in the first language may be collected and stored in a text element file; and translated text elements in the second language or further languages may be merged into the text element file. Accordingly, all text elements in a plurality of different languages may be maintained in a text element file, further facilitating maintenance of a single version of the code of the software application.

Still further, each text element in the first language may be linked to a location in the code with a one of a plurality of property keys. Thus, an association of a text element with a particular location in the code becomes possible, e.g. to provide information for a user at the right point in time or location on a screen, etc.

Further, the translation text element in the second language may be associated with the property keys of the corresponding text elements in the first language. Thus, different versions of a text element in different languages may be linked to a particular location in the code using the same property key.

The text element in the first language may further be associated with a first language identifier and the text elements in the second language may be associated with a second language identifier. Accordingly, a selection of text elements in a particular language e.g. based on language identifier and property key becomes possible.

Still further, the text element file may include context information comprising at least one of the language identifiers and the property keys. Accordingly, the text element file may contain necessary information for providing localized versions of the software application.

Still further, obtaining localized versions of the software application may include: obtaining a functional code element of the software application including a property key for each text element at respectively specified locations; generating a first localized property code element comprising the text elements in the first language and the property keys in association with the text elements; generating a second localized property code element comprising the text elements in the second language and the property keys in association with the text elements; linking the functional code element with the first localized property code element using a first language identifier; and linking the functional code with the second localized property code element using a second language identifier. Accordingly, a single version of the code may be maintained for all languages, whereas the individual text elements in different languages can be provided in property code elements linked to the functional code element through the language identifier and the property keys.

The linking operation may be performed doing a runtime execution of the software application. Thus, e.g. upon installation or activation of the software application or instance of the software application the localized version of the software application can be generated.

The property code elements may be constituted by JAVA properties and the property keys may be constituted by JAVA property keys.

Providing the localized version of the software application for the first language may involve starting a mapping process, the mapping process receiving the first language identifier as an input. Accordingly, the generation of the localized versions of the software application may use the code, and text elements as selected by the language identifier. Since the language identifier may be provided as an input upon generating the localized version of the software application, maintaining a single version of the code is facilitated.

The mapping process may involve one of a compilation and interpretation of the code.

Further, an input file may be generated including at least one of: - language identifiers; - file names of the localized version of the software application; - text elements in the first and second language; and - property keys associated with the text elements. The input file may thus facilitate controlling a mapping process, e.g. on a remote data processing device, as the input file includes necessary information for the mapping process.

Obtaining translated text elements may include extracting relevant information from the text element file and importing the information into a database; and merging the translated text elements back into the text element file. Accordingly, the translation process may be facilitated by, e.g. automatic, extraction of relevant information, e.g. text elements and further information such as language ID and property keys, from the text element file for input to a database for facilitating a translation operation.

Obtaining the translated text elements may also include use of a web-based tool. Thus, the text elements can be translated using external facilities, e.g. through a computer network.

The text element file may be constituted by an XML-file and generating the translation text elements may include an XML-editor, e.g. such as XML Spy. Accordingly, existing technology and formats may be used to generate and maintain the text element file.

The text elements may include at least one of: - menu items of a display screen; - text elements of a display screen; - a runtime message for a user; - help information; - installation information on the application program; - language dependent symbols; - language dependent formatting information; - language dependent layout information; and - language dependent code sections of the code. Thus, the text elements may include all relevant information that is to be presented to a user in a preferred language.

According to another embodiment a program may be provided, having instructions adapted to cause data processing means to carry out at least one of the above operations. Further, a computer readable medium may be provided, in which the above program is embodied. Still further, a computer program product, comprising the computer readable medium may be provided.

Still further, according to another embodiment of the invention a data processing unit for providing localized versions of a software application with text elements may comprise: communication means for accessing the code of the software application associated with a plurality of text elements in a first language and obtaining translations of the text elements in a second language; and a processing element for associating the text elements in the second language with the code and for effecting provision of a first localized version of the software application for the first language and a second localized version of the software application for the second language based on the code associated with the text elements in the first and second language.

Further features of the invention are disclosed in further claims.

BRIEF DESCRIPTION OF THE DRAWINGS

Fig. 1     shows an arrangement for providing localized versions of a software application according to an embodiment of the invention;

Fig. 2    shows operations of a method for providing localized versions of a software application according to an embodiment of the invention;

Fig. 3    shows operations of a method for providing localized versions of a software application according to an embodiment of the invention, particularly outlining use of a text element file;

Fig. 4    shows operations of a method for providing localized versions of software applications according to another embodiment of the invention, particularly outlining maintaining the text element file with text elements in different languages;

Fig. 5    shows operations of a method for providing localized versions of a software application according to another embodiment of the invention, particularly showing use of language Ids and property keys to associate text elements with a code;

Fig. 6    shows operations of providing localized versions of a software application according to another embodiment of the invention, particularly illustrating provision of localized versions based on text elements in different languages;

Fig. 7    shows operations of a method for providing localized versions of a software application according to an embodiment of the invention, particularly outlining providing a functional code elements and localized property code elements including text elements in respective languages;

Fig. 8    graphically illustrates elements of an arrangement for providing localized versions of a software application, particularly outlining a linking functional code element with text elements in different languages using language identifiers and property keys;

Fig. 9    shows operations for providing localized versions of a software application, particularly outlining translation operations; and

Fig. 10   shows elements of a system for providing localized versions of a software application according to another embodiment of the invention, particularly outlining a network environment for providing and using the localized version.

Fig. 11a  depicts a flowchart of a software localization method according to one embodiment.

Fig. 11b  shows a block diagram illustrating an embodiment of an apparatus for localizing software.

Fig. 12   shows a flowchart of a software localization and related text translation method according to one embodiment.

Fig. 13a  depicts a flow chart of a translation method according to one embodiment.

Fig. 13b  shows a block diagram illustrating an embodiment of an apparatus for translating elements of a source language text.

Fig. 14   depicts a flow chart of a translation method according to another embodiment.

Fig. 15   depicts a flow chart of a dictionary database updating method according to an embodiment.

Fig. 16   depicts a section of a database translation table for the use in the above mentioned embodiment for a translation method.

Fig. 17a  depicts a number of user interaction interfaces according to an embodiment.

Fig. 17b  illustrates a schematically flow diagram according to the user interaction shown in Fig. 17a.

Fig. 18a  depicts a number of user interaction interfaces according to another embodiment.

Fig. 18b  illustrates a schematically flow diagram according to the user interaction shown in Fig. 18a.

Fig. 19   depicts an apparatus for translating texts elements according to another embodiment.

Fig. 20   depicts a sentence based electronic translation dictionary according to another embodiment.

Fig. 21   depicts a network system to be used for software localization according to another embodiment.

## DETAILED DESCRIPTION OF THE PREFERRED EMBODIMENTS

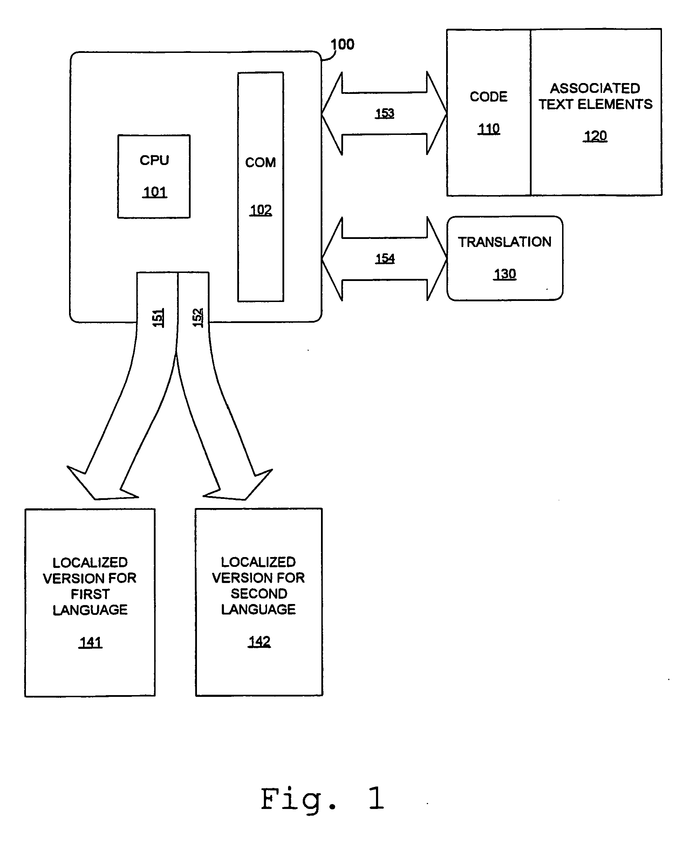

A first embodiment of the invention will be described with respect to Fig. 1.

Fig. 1 illustrates elements of an arrangement for providing localized versions of the software application with text elements in different languages according to an embodiment of the invention.

Fig. 1 illustrates the data processing unit 100 for providing localized versions of a software application having text elements. The processing unit 100 includes communication means 102 for accessing a code of the software application 110 associated with a plurality of text elements 120 in a first language and for obtaining translations of the text elements in a second language, e.g. from a translation service 130 illustrated in Fig. 1. Further, the processing unit 100 includes a processing element 101 for associating the text elements in the second language with the code and for effecting provision of a first localized version 141 of the software application for the first language and a second localized version 142 of the software application for the second language based on the code 110 associated with the text elements in the first and second language.

Accordingly, by associating the code 110, e.g. in a known programming language, with the text elements 120 in the different languages, the process for providing localized versions of the software application in the first and second language is greatly simplified. Instead of requiring a version of the code for each of a plurality of languages, and generating localized versions based thereon, a single code version associate with the text elements in the different languages can be used. Thus, it is not any longer necessary to maintain a plurality of versions of the code corresponding to each of the languages, it rather is only necessary to maintain a single version of the code linked to the text elements. If for example modifications of the software application are to be implemented, e.g. for updating or introducing functionality of the software application, the embodiment shown in Fig. 1 only requires implementation of the modifications in a single version of the code, as opposed a prior art technique were modifications are to be implemented into each language specific version of the code. The code may be a source code or any other sequence of instructions.

The code associated with the text elements in the different languages may be then mapped into the localized versions of the software application, e.g. by using a language identifier as an input.

For example, a localized version of the software application for the first language may be provided by starting a mapping process receiving a first language identifier as an input, and a second localized version of the software application for the second language may be generated by starting the mapping process receiving a second language identifier as an input. Both mapping processes may be started sequentially or concurrently, e.g. automatically, if a new version of the software application based on a modified code is to be generated.

In the present example two languages are considered, leading to the two localized versions of the software application 141 and 142, as illustrated by the two arrows 151 and 152. However, it is noted that an arbitrary number of languages and thus an arbitrary number of localized software applications may be provided using the embodiment shown in Fig. 1.

The mapping process illustrated by arrows 151 and 152 may be executed at the data processing unit 100 or by an external data processing device, e.g. instructed by the data processing unit 100 to perform the mapping operation. The mapping process may involve a compilation of a code, e.g. using a known programming language and compiler. Further, the mapping process may involve an interpretation of the code, e.g. using a known language and interpreter. The localized versions of the software application 141 and 142 may be constituted by code format directly executable on a data processing device, or by an intermediate code format requiring further transformation operations prior to an execution on a data processing device.

In particular, if the mapping process is executed at an external data processing device, an input file may be generated and transferred to the external data processing device for the mapping process. This input file may include necessary information for performing the mapping operation, e.g. compilation or interpretation of the code based on the text elements in the respective languages. For example the input file may include language identifiers specifying the languages of the localized versions, file names of the localized versions of the software application, text elements in the different languages or address information on a storage location of the text elements in the different languages; and property keys associated with text elements. The property keys may provide a link between a location of a text element in the code and the text element itself. The input file may further include the code or address information on a storage location of the code.

The input file thus facilitates providing the code, obtaining the text elements linked to the respective locations within the code, through the property keys, generating the localized versions of the software application and storing or transferring the generated localized versions under the given file names. Thus, an automatic generation of localized versions based on a single code file becomes possible.

In another example the text elements may be provided at specified positions within a code file including the code. For example, screen elements, user dialogs, messages and similar could be directly inserted into the code file include the code in any programming language. Further, the processing element 101 shown in Fig. 1 may be adapted to merge the translated text elements in the second language in the code file at the positions of the corresponding text elements in the first language. Accordingly, at each specified location within the code requiring a notification using text including signs, symbols or characters, the text elements in the different languages may be provided.

The translated text elements could be automatically inserted into the code or translations could be included manually. When obtaining the localized versions for the respective languages, the data processing unit or other data processing device performing the mapping process could then consider the text elements in the code in a particular language, for example in dependence on a language identifier provided.

Alternatively or further thereto the processing element 101 may be adapted to collect the text elements in the first language in a text element file. For example, the code could already include text elements in a particular language provided by a software developer, for example English as it is commonly spoken, i.e. the code could be written and/or maintained, modified or similar using English text elements at the specified locations.

Generally, the text elements may include any language dependent code sections of the code such that the code as referred to above includes only language independent code sections.

The text elements in the first language, in the present example English, could then be extracted, for example by an automatic process, and stored in a text element file. The text element file, not shown in Fig. 1, then includes all text elements in the first language, i.e. English. Thereafter, translations will be obtained and the text elements in the second language, e.g. German, may then be included, e.g. by the processing element 101, into the text element file. A similar proceeding could be adopted for further languages.

Accordingly, all text elements may be centrally maintained and handled in the text element file, while the code may only include references to the individual text elements at the specified locations. Thus, the code could be language independent and could thus be maintained, modified, etc., without having to pay attention to provision of text elements in different languages. The text element file could be maintained independently, e.g. in a translation facility or similar. During generation of the localized versions of the software application, the language independent code and the text element file can then be invoked in the mapping process, further receiving desired language identifiers as an input. It is noted that the code may, for information purposes, include descriptions of the respective text elements in addition to property keys referencing the text elements, for example as comments introduced into the code.

In order to facilitate a linking of the respective locations of the code with individual text elements, as briefly mentioned before, the processing element or any other unit may be adapted to link each text element in the first language to a location in the code with one of a plurality of property keys. A property key may be any kind of marker allowing linking a location in the code with a text element.

Moreover, the translation text elements in the second language may be linked with the property keys of the corresponding text elements in the first language. Likewise, text elements in further languages may be associated with the respective property keys of the text elements in the first and second language. Accordingly, each location in the code requiring a text element could be linked to the text element through property keys referencing the text elements. Known techniques for providing property keys linking a code location with a text element may be employed.

To further facilitate the generation of localized versions of the software application prior or during the mapping process, the text elements in the first language may be linked with a first language identifier and the text elements in the second language may be linked to a second language identifier. Likewise, text elements in further languages may be linked to further language identifiers. The language identifier may, for example, be included into the text element file in association with the text elements in a respective language, however, it is also possible that a selection of text elements based on a language identifier is effected by a particular sequential arrangement of the text elements in the text element file. Accordingly, association of the text elements with the language identifiers may be effected by including language identifiers in the text element file, may be effected by including language identifiers into the code or may be effected by a defined arrangement of text elements in the different languages in the text element file or code.

The text element file may include context information comprising the language identifiers and/or the property keys and a language identifier dependent and property key dependent selection of a text element in a particular language may be effected.

Alternatively, the code may be maintain by e.g. software engineers with text elements in a first language understood by the software engineers or developers and the text element file including text elements in the first language and/or any other number of further languages may be generated based on extracting the text elements from the code and obtaining translations of the text elements in the respective languages.

According to a further alternative the data processing unit 100 or any other processing device or group of devices may be adapted to obtain a functional code element of the software application including a property key for each element at respectively specified locations. The functional code elements may be a version of the code excluding the text elements, but including instead of the text elements property keys at the respective locations of the text elements and referencing the text elements. The functional code element may thus constitute a language independent code which may be subject to a development process with functional amendments, updates and similar. The functional code elements may be maintained and further developed by software engineers without having to address any language issues regarding text elements. For explanatory reasons, a comment may be provided at the specified locations in the code describing or representing the content of the corresponding text element. This explanatory text or other type of information may be in a language or format preferred by, e.g. a developer.

The functional code element may include the core functionality of the software application, e.g. user interaction functionality such as a graphical user interface, data retrieval and storage functionality, data manipulation functionality, etc., however, preferably without any language dependent code sections.

Further, the processing unit 100 or the processing element 101 or any other data processing device may be arranged to generate a first localized property code element comprising the text elements, i.e. the language dependent code sections of the code, in the first language and the property keys in association with the text elements; and to generate a second localized property code element comprising the text elements in the second language and the property keys in association with the text elements. Thus, the text elements may be grouped according to language and provided in a localized property code element. The property code element may include code written in a programming language and specifying or defining the text elements in the particular language. Of course, as before property code elements for further languages may be created.

The property code elements may be generated based on the text element file, i.e. may constitute language dependent localized versions of the text element file or be in any other format.

Accordingly, while the language independent functional code element providing the actual functionality of the software application excluding the text elements of dialogues, information elements and similar, may be maintained by software engineers or developers, the text element file and/or the localized property code elements may be maintained by specifically trained staff or facilities for handling translation of the text elements. For example, a translation department of a company may be responsible for maintaining the text element file, i.e. may handle the translation or obtaining of translations of the text elements and merging into the text element file.

Further, the data processing unit 100, the processing element 101 or any other data processing device may be arranged to a link the functional code element with the first localized property code element using a first language identifier and may be arranged to link the functional code element with the second localized priority code element using a second language identifier. The linking operation may be performed during runtime execution of the software application or during a compile or interpretation operation of the mapping process. Accordingly, the mapping process may receive the functional code element and a localized property code element for generating a localized version of the software application.

Alternatively, during the mapping process or during run time execution one of the property code elements may be selected based on a language identifier, to generate a localized version of the software application. The language identifier could be provided by a user, specifying a desired language, an ISO code, which is internationally adopted.

According to a further example, the property code elements may be constituted by JAVA properties and the property keys may be constituted by JAVA property keys. Accordingly, existing functionality of the JAVA language and processing environment may be employed, in order to facilitate generation of localized versions of a software application at reduced development processes.

Further, the data processing unit 100 or the processing element 101 or any other processing device may be adapted to obtain translated text elements by extracting relevant information from the text element file and importing the information into a data base. Thus, prior or upon starting the mapping processing for providing the localized versions of the software application, the e.g. centrally maintained text element file may be parsed and relevant information may be imported into a data base or any other memory. The relevant information may exclude extracting the text elements in a first language, including extracting a language identifier and/or property keys, if provided.

Alternatively, the text elements and/or relevant information may be extracted from the code having the text elements in a particular language. Thereafter, the text elements may be translated into one or a plurality of further languages and the translated text elements may be merged back into the text element file or code.

The translation of the text elements may be accomplished by any known technique, e.g. using a translation application, manually translation of the text elements, or similar. The text elements may also be translated using a web-based tool, e.g. a translation service available over a computer network such as the Internet.

To further facilitate handling of the text element file and the text elements, the text element file may be constituted by an XML (eXtendible Markup Language) file and generating the translated text elements may include an XML editor, like XML Spy. Thus, existing tools and/or techniques may be used to facilitate and maintaining the text element file including text elements in the various languages.

The text elements may, as outlined before, include any kind of string or message, such as menu items of a display screen, text elements of a display screen, a run time message for a user, help information, a help data base file, installation information on the application program and similar.

Alternatively, or further thereto, the text elements may constitute versions of any symbols or signs and may describe formatting information for a language dependent formatting of objects and similar, e.g. currency identifiers, language dependent symbol or character versions, digit versions, language dependent shapes, coloring of screen regions and similar.

Moreover, the code may be a source code, such as a source code of the application written by a user in any known programming language, e.g. C, C++ and similar. Alternatively, the code may be on an intermediate level, e.g. code generated by a conversion program, that converts source code of one programming language into a code of another programming language or into any other sequences of coded instructions for a data processing device, including machine language.

In the following further examples of the individual elements of the arrangement shown in Fig. 1 will be outlined in further detail. It is noted that the following constitutes examples only and should not be construed as limiting the invention.

Examples of the data processing unit 100 will now be outlined in further detail.

The data processing unit 100 may be constituted by a general purpose data processing device or group of data processing devices interconnected by a communication network. For example, the data processing unit 100 could be constituted by or include a desk top computer, a lap top or palm top computer, a personal communication device, personal data assistant and similar, including mobile phones. Further, the data processing unit 100 may include one or a plurality of server units, i.e. larger computing devices for providing services to a large number of clients operated by users.

The data processing unit 100, as shown in Fig. 1, includes communication means 102, e.g. any kind of unit or equipment for performing communications, either internal to the data processing unit, or to external locations, e.g. an externally arranged data processing device storing or providing a code 110 with associated text elements 120, as indicated by the double arrow 153. Further, the communication means 102 may be adapted to communicate with a translation element 130, as indicated by the double arrow 154 and, the communication means 102 may be adapted to communicate to the processing element 101 of the data processing unit 100, e.g. a central processing unit.

The communication means, as known in the art, may include required terminals for an external communication with further data processing devices, e.g. data processing devices hosting the code and associated text elements and/or the translation element. Further, the communication means may include internal communication links, e.g. to the processing element 101 or any further element, e.g. through a system bus or similar.

In the embodiment of Fig. 1 the code 110, the associated text elements 120 and the translation element 130 are shown eternal to the data processing unit, i.e. the communication links 153 and 154 are external links.

In an alternative embodiment, however, the code 110 , the associated text elements 120 and the translation element may be located internal to the data processing unit, and in this case the communication means may include or employ elements for realizing an internal communication with these elements within the data processing unit, e.g. memory access, translation of digital information over internal communication paths and similar.

In a further alternative the communication means 102 may be located external to the data processing unit 100, e.g. may assume the function of a data router or handler accessing and/or retrieving and/or routing the code and/or associated text elements to the data processing unit 100. Further, the communication means may be or include an external interface for communicating according to a communication protocol with the data processing unit 100 and further communication devices, e.g. a processing device hosting the translation element 130 and/or the code 110 and the text elements 120.

The data processing unit 100 further includes a processing element 101, e.g. a central processing unit. The central processing unit may be configured using a suitable program code to realize at least part of the functional characteristics of the present or may function as a control unit for controlling external processing elements to perform certain functionalities, e.g. providing a translation service, performing a mapping process, extracting text elements, generating a text element file, associating text elements and code, etc.

Further, the processing element 101 may be constituted by a plurality of processing units, e.g. a plurality of processing units of a plurality of data processing devices. Accordingly, the functionality of the present embodiment may be distributed over a plurality of data processing devices or may be realized at a single data processing device.

In the following, examples of the code 110 and the associated text elements 120 will be outlined in further detail.

The source 110 may be a code for virtually any kind of application, including for example, a text processing application, a spreadsheet application, an imaging or video processing application, an engineering application, a scientific application, a personal communication application, a personal organizer application, a banking application, a purchasing or sales application, an information service and similar. The application may also be at least part of an operating system application or similar.

The code may be a single piece of code, or may include a plurality of code elements, e.g. objects relating to functions of the software application.

The code may be written in any kind of programming language such as C, C++, by a software engineer, or may be automatically generated by another software application capable of generating code, e.g. based on specified functionality requirements.

As outlined above, the software application will require the display or presentation of text and/or information elements, e.g. to a user controlling execution of the software application. Thus, the code will be required to include pieces of code which specify the presentation of information or text to the user. This information in the form of text, further symbols, signs or digits, formats and similar, as outlined above, will have to be presented to a user during various stages of the execution or installation of the software application or may require presentation at a particular location on a screen, etc. Thus, the code will, at specified locations, include specific text elements to effect proper presentation of information to a user executing the corresponding software application, i.e. the executable code.

The text elements may include or constitute those portions of the code which are language dependent. This may be merely the textual information element or may include program code related to effecting certain language dependent presentation of information, e.g. regarding format, layout, size of a screen element in association with text information.

For example, a text element in the English language may appear in a horizontally oriented elongated field with a text information included left to right. Another language, such as Japanese, may require an elongated field for a text element in a vertical orientation, for arranging Kanji, Hiragana or Katakana symbols in a top-down direction. Other languages may require text elements with text information from a right position towards a left position on a screen or any other arrangement. Thus, the text element may not only include written information but also further information on a language dependent appearance or layout.

The code may include the information elements in accordance with a particular language, and a software engineer responsible for maintaining the code e.g. updating or modifying, is only required to handle a single version of the code with the text elements in one language, preferably a language understood by the software engineer or developer, or with property keys such as markers providing a reference to the text elements.

In preparation of providing localized versions of the software application based on the code, the text elements may be extracted and translated and then merged back into the code, such that the code includes text elements in accordance with different languages.

Alternatively, the associated text elements may be provided in a separate file, such as the text element file, referenced or associated with the code using property keys and/or language identifiers, as outlined above. Thus, the associated text elements 120 may form an integral part of the code 110 or be provided separately, e.g. in a separate file.

The code and/or associated text elements may be included in one or a plurality of files, as known in the art, for storage in a memory. The code and/or the associated text elements may be physically located within the data processing unit 100 or may be located at any external location, for example on further processing devices. It is also possible that the code and/or the associated text elements are distributed over a plurality of further data processing devices.

Moreover, the code and/or associated text elements may be stored in an internal memory of the data processing unit 100.

Access to the code and/or associated text elements, as illustrated by arrow 153, may be enabled to any kind of internal communication link and/or external communication link, e.g. involving a computer network, such as a package switched network like a local area network (LAN) or a wide area network (WAN), including the Internet.

As outlined before, the associated text elements may be maintained in an XML file, for ease of handling and the code may be written in any known programming language, such as C or C++ or any other programming language.

In the following the translation element 130 will be outlined in further detail.

The translation element may be any application for providing a translation or transformation of text elements into different languages, including a translation of language dependent symbols, characters, digits and formatting or layout information. The translation service may be a translation application resident at the data processing unit 100 or at any other data processing device.

Further or alternatively thereto, translation operations may also be performed manually, i.e. translated text elements may be obtained involving user or operator interaction. The translation element may involve a network based tool, such as a translation service available over computer networks like the Internet.

Accordingly, the translation element 130 may be accessed through external communication links, as illustrated by the double arrow 154, or may be accessed via internal communication paths, if the translation element 130 is provided internally to the data processing unit 100.

In the following examples of the mapping process and the localized versions for the first and second language 141 and 142 will be outlined in further detail.

The localized versions of the software application may be constituted by executable code or elements of executable code constituting the software application. The code elements may be adapted for execution on the data processing unit 100 or at any other data processing device, such as a client unit or desktop computer or similar. Alternatively or further thereto the localized versions of the software application may be in an intermediate code form not directly suitable for execution on a data processing device but requiring further processing prior to execution.

The mapping process, as mentioned above, may involve a compilation process of the code involving the text elements in various languages, or may involve an interpretation process for obtaining executable code or code elements.

The mapping process may further receive as an input a language identifier, in order to specify a desired language for a localized version of the software application or may receive a plurality of language identifiers for specifying a plurality of desired languages. Alternatively, it is also possible that the mapping process is arranged to automatically generate versions of the software application in all available languages without further interaction or provision of language identifiers. The mapping process may be executed locally at the data processing unit 100, or started under supervision of the data processing unit 100, for example at another data processing device. For facilitating generating the localized version of the software application, the mapping process may receive, as an input at least one of language identifiers, file names for the respective localized versions of the software application, text elements in the respective languages and/or property keys associated with the text elements. Further, the mapping process may receive as an input an address or location of the code, or a copy of the code and/or associated text elements. This information may be supplied in the form of an input file generated and/or transmitted to the data processing unit 100 or any other processing device.

In the example shown in Fig. 1 it is assumed, as illustrated by an arrow 151, that a first localized version of the software application for the first language 141 is generated based on the code and the associated text elements in one language. Further, a second localized version 142 of the software application for the second language is generated, as illustrated by arrow 152, based on the code and associated text elements in another language. Alternatively, one localized version may include text elements in multiple languages.

The localized versions may be stored at any location, e.g. internal to the data processing unit 100, at another data processing device, may be stored on a data carrier or transmitted via a communication link. For example, the localized versions may be localized on data carriers constituting a computer program product.

It is understood that the elements of the embodiment shown in Fig. 1 may be located at a single computing device or on a plurality of computing devices in communication with one another. The communication may be accomplished via any kind of communication link, however, it is also possible to transfer information or instructions between the data processing devices via data carriers, e.g., floppy discs or CD-ROM.

It is further possible that the above functions are executed in a client server environment. Certain functions of the embodiment shown in Fig. 1 may be realized under control of a client unit, e.g. operated by a client and accessing a server. The client may be used to control generation of the localized version of the software application for a particular language, e.g. a language preferred by a user operating the client unit. The localized version may be generated at a server unit, e.g. upon launching an instance of the service application for the client unit.

It is further understood that while the embodiment of Fig. 1 only shows an example with a first and a second language, the example may be extended to an arbitrary number of languages.

The embodiment described with respect to Fig. 1 facilitates cost effective generation of localized versions of a software application by eliminating the need to maintain different code versions for different languages. Instead, text elements are maintained, e.g. centrally in a text element file, and provided to the mapping process together with the code in order to generate a plurality of localized versions of the software application.

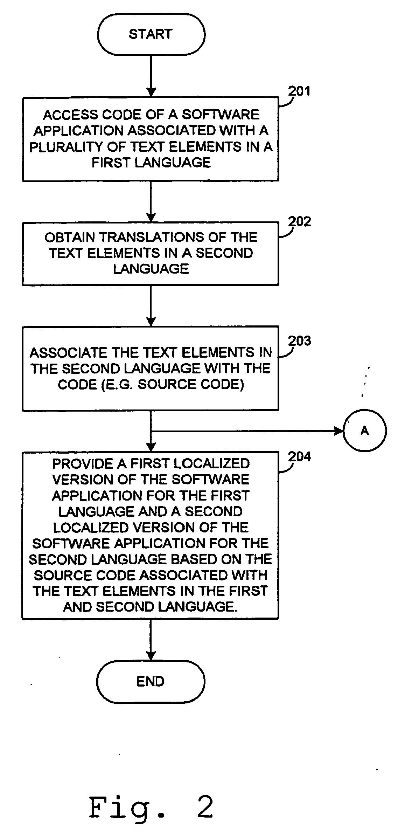

In the following a further embodiment of the application will be described with respect to Fig. 2.

Fig. 2 shows operations of a method for providing localized versions of a software application according to another embodiment of the invention. The operation shown in Fig. 2 may be executed using the arrangement shown in Fig. 1, however, Fig. 2 is not limited thereto.

In a first operation 201 a data processing device such as the data processing unit 100 accesses a code of the software application associated with a plurality of text elements in a first language. The text elements, as outlined before, may be directly incorporated into the code, or may be provided at an external location, e.g. a text element file, and may be associated with particular locations of the code using property keys. The code may be accessed at an internal memory or may be retrieved from an external location, e.g. from a site maintained by software developers responsible for the code.

For example, any time a new software release or software version is available, the code and text elements of the software application may be accessed in order to generate localized versions of the software application for the respective languages.

Further, the plurality of text elements, e.g. provided in the text element file may be obtained from an internal memory or from an external location, e.g. the site maintained by the software developers. Thus, the software developers could maintain the code and the associated text elements in a first language, e.g. a language known by the software developers, for example the English language.

In an operation 202 translations of the text elements in a second language are obtained, e.g. under control of the data processing unit 100 shown in Fig. 1. The translations of the text elements may be obtained using any known technique, e.g. translation service, manual translation and similar. As the text elements may also include language dependent formatting and/or layout information, special symbols, signs, digits and similar, the translation operation may also involve obtaining corresponding symbols, digits, formatting and/or layout information associated with another language.

The information exchange necessary for the translations may involve internal communication links or external communication links and may in internal translation tool or an external translation tool, e.g. a web-based tool or any other kind of translation service.

In an operation 203 the text elements in the second language are associated with the code, e.g. under control of the data processing unit 100 shown in Fig. 1. Associating the text elements in the second language with the code may involve inserting the text elements in the second language into the code, e.g. at the respective location of the text elements in the first language. Further, this may involve inserting or merging the text elements in the second language into a text element file, as outlined with respect to the embodiment of Fig. 1.

In this case a text element in the first language and a text element in the second language may be associated with a code location, e.g. using a property key, as outlined before.

In an operation 204 a first localized version of the software application for the first language and a second localized version of software application for the second language may be provided based on the code associated with the text elements in the first and second language. The localized versions may be generated at the data processing unit 100, or at any other data processing device, e.g. communicating with the data processing unit 100.

Alternatively, the code and associated text elements could be intermediately stored on a data carrier such as a CD-ROM and may be loaded into a general purpose data processing device or any other kind of processing device for instructing generating a localized version of software application for one of the languages, e.g. as specified by a user according to preference.

The first and second localized versions of the software application may include one or a plurality of executable code modules, e.g. generated in a mapping process involving a compilation or interpretation of the code, as outlined before.

The embodiment describes with respect to Fig. 2 facilitates an efficient generation of a plurality of localized, i.e. language dependent versions of the software application, as only one version of the code needs to be handled, while the process of providing translated text elements may be realized independent from maintaining the software code. Maintenance of different code versions in different language dependent form is no longer necessary.

The above technique may involve known functionality, e.g. JAVA properties and JAVA property keys, particularly if the software application is to be executed in a client server environment, as outlined before. In this case a code element could be transferred from a server to a client including a text element or a localized property code element and the client could generate an executable version of the JAVA-based code, e.g. applet, based on the text element or JAVA property code element including the text elements in a particular language. The selection of the language may be performed upon launching an application involving the JAVA code transmission or may be effected upon generating the executable code based on the JAVA code element.

It is noted that a program may be provided having instructions adapted to cause a data processing device to carry out at least one of the above operations. Further, a computer readable medium may be provided, in which a program is embodied, where the program is to make a computer execute the method of the above operations.

Also, a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

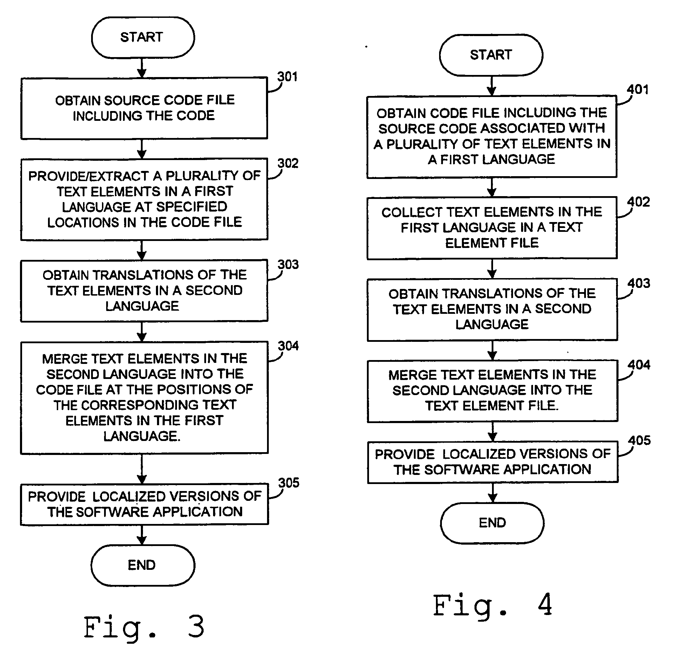

In the following a further embodiment of the invention will be described with respect to Fig. 3.

Fig. 3 shows operations for providing localized versions of a software application according to another embodiment of the invention. This embodiment particularly illustrates how text elements can be included directly into the code. The operation may be carried out using the embodiment shown in Fig. 1, however, Fig. 3 is not limited thereto.

In a first operation 301 a code file including the code is obtained, e.g. using the data processing unit 100 shown in Fig. 1 or any other processing device. The code file may be obtained from a memory, where it was beforehand stored for example by a software developer handling the code. The code file may also include a plurality of file elements, e.g. code segments in different file elements stored at arbitrary locations. The code file may be obtained through a communications network from another data processing device, may be retrieved from internal data storage means or may be loaded from a data carrier into a computing device, e.g. a floppy disc or CD ROM.

The code in the code file may include elements of a programming language, as outlined above, however, it is also possible that the code includes intermediate language format, e.g. interpreted or pre-processed in preparation of providing an executable code.

In an operation 302 a plurality of text elements is provided at specified locations in the code file, e.g. by a software developer. Alternatively, the text elements may already be included into the code file upon obtaining the code file in operation 301. For example, the text elements may be in a language preferred by a software developer, e.g. English.

Further, in operation 302 the text elements in the first language are extracted from the code file and, in an operation 303, translations of the text elements in a second language are obtained. The translations may be obtained by any translation service or technique, as outlined with respect to previous embodiments.

In an operation 304 the translated text elements in the second language are then merged back into the code file, e.g. at the positions of the corresponding text elements in the first language. Thus, at each location of the code requiring notifications dialogs or any kind of language dependent information will now include the text element in the first and second language. The text elements in the first and second language may be delimited from one another by any kind of marking, optionally including a language identifier specifying the language of the text element.

Merging the text elements in the second language into the code.may be automatically done, e.g. by an application detecting locations in the code including text elements and appending the text element in the second language to the text element in the first language.

Of course the inclusion of text elements in further languages is possible. In this case the sequential order of the text elements may be used to indicate a language of the respective version of the text element, or language identifiers may be used, as mentioned above.

Thereafter, in an operation 305 the localized versions of this software application are provided, e.g. by the data processing unit 100 or any other data processing means.

The embodiment of Fig. 3 illustrates that a single code file can be maintained and, upon reaching a certain development level, e.g. of a new release version, after including new functionality and similar, text elements in further languages may be included and the localized versions of the software application can be generated based thereon.

In the following a further embodiment of the invention will be described with respect to Fig. 4.

This embodiment illustrates an example where the text elements are maintained at a separate location, as opposed to the previous embodiment, where the text elements in the various languages are inserted into the code file.

The embodiment of Fig. 4 particularly outlines operations for collecting text elements in a text element file, in order to allow a centralized maintenance of text elements in a plurality of languages. The operations shown in Fig. 4 may be carried out using the embodiment shown in Fig. 1, however, Fig. 4 is not limited thereto.

In a first operation 401 a code file including the code associated with a plurality of text elements in a first language is obtained or provided. As before, the code may be provided by a software developer including text elements into the code in a language preferred by the software developer.

The text elements, as mentioned before, may include notifications, dialogs, symbols and similar. Further, the text element may include language dependent formatting information and further information related to a display of the text element, e.g. coloring and similar.

Then, in an operation 402 the text elements in the first language are collected in a text element file. This may be an automatic extraction process using an application detecting and extracting text elements and further relevant information from the code. In order to maintain the correspondence between the text elements and the respective locations in the code property keys such as markers may be used, as outlined before.

The text element file may be maintained at the data processing unit 100 shown in Fig. 1, or at any other data processing device, e.g. remotely connected to a data processing device storing the code. Further, the text element file may be in an XML (eXtendible Markup Language) format in order to facilitate handling of the text element file. Further to the text element, the text element file may include additional information such as a language identifier specifying a language of respective text element and/or property keys such as markers for linking the text element to a code location.

In an operation 403 translations of the text elements in a second and/or further languages are obtained. For example, the text element file may be transferred to a translation service or the individual text elements may be extracted from the text element file and translations may be obtained one by one from a translation service. The translation service, as outlined with regard to previous embodiments, may be an internal translation or transformation tool for transforming the text element including the additional information, such as formatting information etc., into another language. Further, the translation tool may be accessed through a network, e.g. a web-based translation tool may be accessed through the Internet. However, it is also possible that a manual transformation and translation is carried out. A translation may also involve an XML editor like XML Spy.

After obtaining the translations in the second language the text elements including further information are merged into the text element file in an operation 404. A similar proceeding may be carried out for further languages such that the text element file will contain a plurality of text elements, each in a plurality of languages.

The text elements may be grouped in blocks including one text element in all provided languages. In this case a property key or marker associated with a location in the code could be used as a reference to the text element block. Alternatively, the text elements could be arranged in groups, each group including all text elements in a particular language.

However, any other arrangement of the text elements in the text element file is possible.

Identification of a text element in a particular language in the text element file may be effected through language identifiers and/or property keys or may employ a pre-defined grouping of the text elements in the text element file, as outlined before.

In a subsequent operation 405, localized versions of the software application can be provided, as outlined before. This may involve providing the code and the text element file to a mapping process or similar.

The embodiment of Fig. 4 shows an advantageous handling of all text elements in a central text element file, associated with the code. Thus, the code and the text element file may be independently maintained for reducing a development effort in providing localized versions of the software application.

Alternatively it is, however, also possible that the text element file comprises a plurality of text element file components which may be maintained at different locations and that are considered in the mapping process. Likewise, the code can include a plurality of code elements, e.g. one code element corresponding to at least one text element file component. Likewise, one text element file component could correspond to at least one code element.

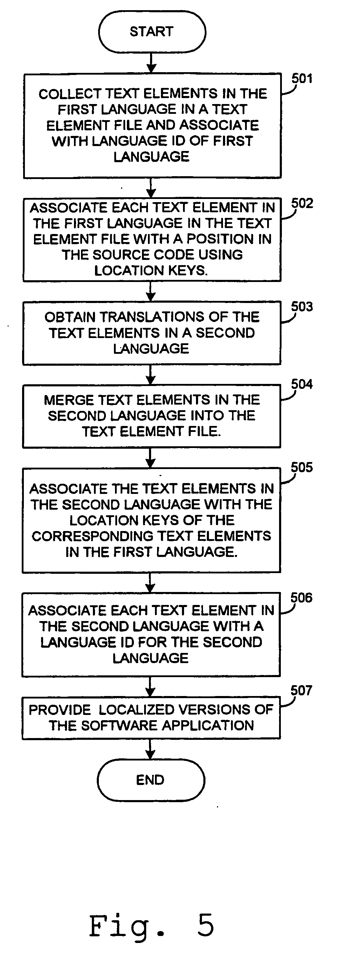

In the following a further embodiment of the invention will be described with respect to Fig. 5.

Fig. 5 shows operations for providing localized versions of a software application according to an embodiment of the invention, particularly outlining the use of language identifiers and property keys. The operation shown in Fig. 5 may be carried out using the embodiment of Fig. 1, however, Fig. 5 is not limited thereto.

In a first operation 501 text elements in a first language are collected in a text element file and associated with a language identifier of the first language. For example, when extracting the text elements from the code, a language identifier could be included, or, the text element in the first language could be stored at a predefined location within the text element file associated with the first language identifier.

In an operation 502 each text element in the first language in the text element file is associated with a position in the code, e.g. using property keys.

A property key may be any kind of link allowing to associate a text element with a predefined location in the code.

Thus, a property key could be included at a position of a text element in the code, and a corresponding or linked property key could be included into the text element file in association with the text element. Accordingly, with operations 501 and 502 each text element would be associated with a language identifier and a property key, i.e. a language and a particular location in the code. The property keys may be JAVA property keys, in order to advantageously use existing techniques for linking text elements to code locations.

In an operation 503 translations of the text elements in a second language are obtained, as outlined with respect to previous embodiments.

In an operation 504 the text elements in the second language are merged into the text element file, for example outlined with respect to previous embodiment.

In an operation 505 the text elements in the second language are associated with the property key or markers of the corresponding text elements in the first language.

Likewise, in an operation 506 each text element in the second language associated with a language ID for the second language. Accordingly, with operations 505 and 506 the text elements in the second language are also linked to language identifiers and linked to the respective locations in the code, as the text elements in the first language.

Thereafter, in an operation 507 the localized versions of the software application can be obtained, e.g. by providing the code including the property keys and the text element file including language identifiers and property keys to the mapping process, in order to generate localized versions of the software application for the first and second language.

Of course, further languages may be considered.

The operation in the embodiment of Fig. 5 shows the advantageous use property keys and language identifiers in associating text elements of the text element file with the code, in order to facilitate independent maintenance of the code file and the text element file.

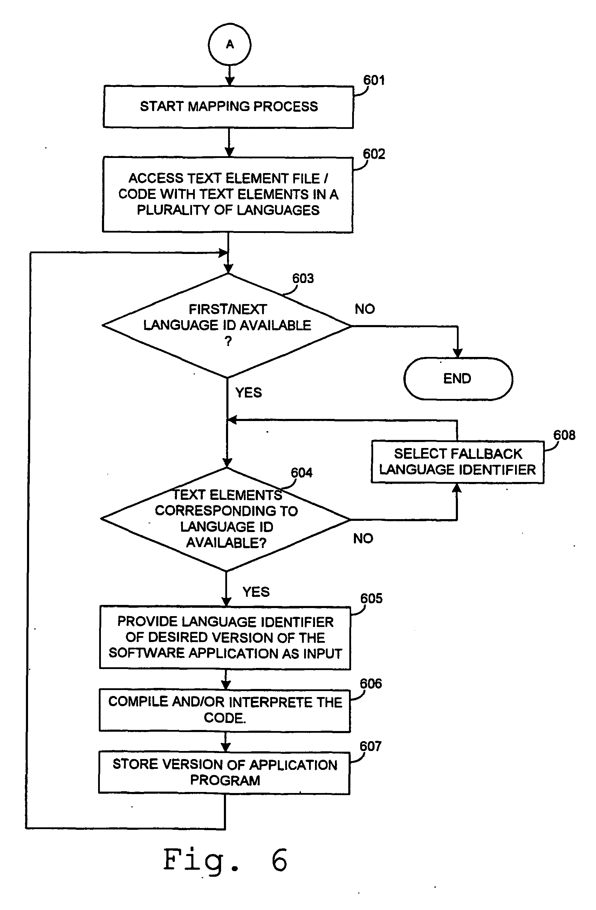

In the following a further embodiment of the invention will be outlined with respect to Fig. 6.

Fig. 6 shows operations for obtaining localized versions of a software application according to another embodiment of the invention, particularly outlining a mapping process. The operations of Fig. 6 may be carried out using the embodiment of Fig. 1, however, Fig. 6 is not limited thereto.

Operations may start at an entry point A connected to an exit point A shown in Fig. 2 after operation 203 of Fig. 2. Accordingly, the mapping process may receive a code with associated text elements in a plurality of languages such as outlined with respect to Fig. 1 and with respect to Fig. 2, e.g. within the code or provided with a text element file.

In an operation 601 the mapping process is started. The mapping process could be executed or controlled through the data processing unit 100 shown in Fig. 1, or at any other data processing device. For example, the data processing unit 100 may instruct an external computing device, such as a server unit, to start the mapping process. This may be particularly useful in case the data processing unit has limited processing capabilities, e.g. if the data processing unit is a small computing device such as a personal digital assistant, a mobile phone, a palm top computer and similar.

In an operation 602 the text element file and the code or the code with the text elements in a plurality of languages included is accessed. Again, this may be performed at the data processing unit such as the data processing unit 100, or at a remote data processing unit, e.g. a server, as mentioned above.

In an operation 603 it is determined whether a first or next language identifier is available, indicating that different localized versions should be obtained.

If a language identifier is available, i.e., if the answer in operation 603 is "YES", it is determined in an operation 604 whether text elements corresponding to the current language identifier are available. This may for example be accomplished by searching the text element file for text elements in the current language or equivalent operations.

If a text elements corresponding to the current language are available, i.e., if the answer in operation 604 is "YES", in an operation 605 the language identifier of the desired version of the software application is used as an input and, in an operation 606 the code is mapped to the localized version of the software application, e.g. in a compilation or interpretation process, e.g. as outlined with regard to previous embodiments.

In an operation 607 the obtained localized version of the application program is stored, e.g. at a data processing unit such as the data processing unit 100 shown in Fig. 1, or at a server unit as mentioned above.

Thereafter, the flow returns to operation 603, and the next available language identifier is considered for generating a further localized version of the software application.

If an operation 603 a further language identifier is not available, i.e. if the decision is "NO", e.g. if only a single or a limited number localized version is to be generated, e.g. upon installation of the software application at a computing device, or upon receiving a code fragment at a client unit, such as a JAVA applet or similar, the process may terminate.

Further, if in operation 604 it is determined that text elements corresponding to the current language are not available, i.e. if the decision in operation 604 is "NO", a localization in the current language is not possible, i.e. a version of the application program corresponding to that particular desired language cannot be created. This may for example be the case if text elements in that particular language are not available or incompatibilities exist. In this case in an operation 608 a fallback language is selected.

In one embodiment there may be a predefined fallback language for each language, for example the fallback language for the French language may be the German language and the fallback language for the German language may be the English language.

Alternatively, a fallback language may be selected based on user interaction, e.g. through presenting a list of available languages and making a corresponding selection.

The flow of operations then returns to operation 604 where it is determined whether text elements in the fallback language are available. If yes, operations continue with operation 605. If not, a further fallback language can be selected using the above described process. Preferably the designations of languages to fallback languages (and further fallback languages) are such that they ultimately lead to the language used for originally generating the text elements of the code or source code as this language will always be available.

It is noted that the operations 604 and 608 may be optional and be omitted in alternate embodiments. In this case operations in the "YES" branch at operation 603 may continue directly with operation 605.

Accordingly, with the above operations any desired number of localized versions of the software application may be obtained.

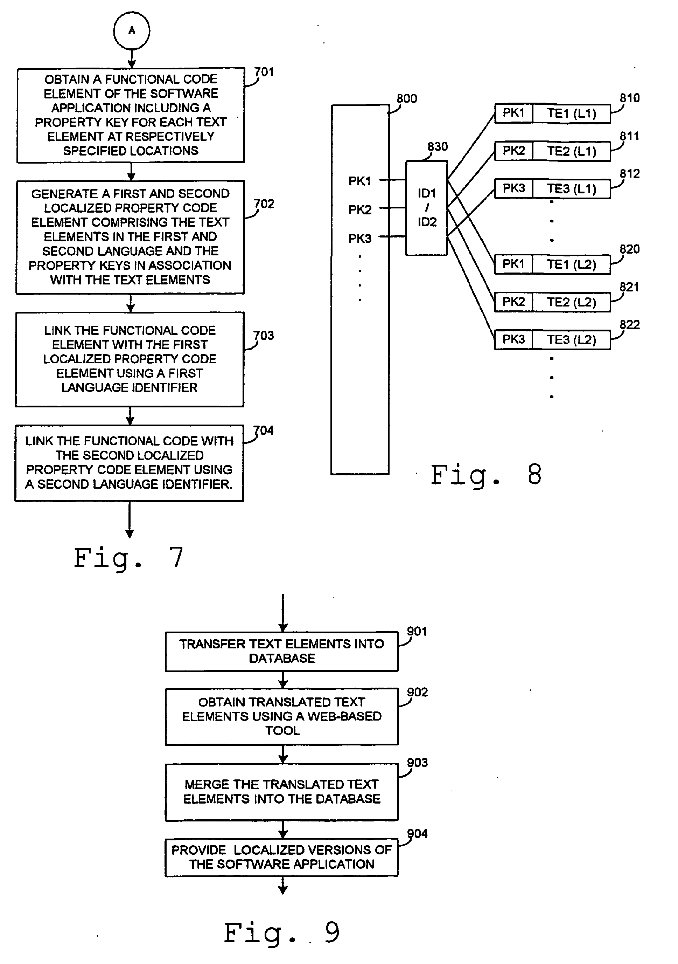

In the following a further embodiment of the invention will be outlined with respect to Fig. 7.

Fig. 7 shows operations of an embodiment for obtaining localized versions of a software application using localized property code elements and a functional code element. The operations of Fig. 7 may be carried out using the embodiment shown in Fig. 1, however, Fig. 7 is not limited thereto.

In an operation 701 a functional code element of the software application is obtained. The functional code element may include all function related code portions of the software application, e.g. stripped of any text elements, the text elements including language dependent code sections related to further information such as formatting or layout information and similar.

Instead of text elements the respective locations of the code may include property keys associated with each text element. Further, for information purposes, at the locations of the source could formally containing the text elements, a description of the text element, format and similar may be included, e.g. for informing a software developer.

In an operation 702 a first localized property code element comprising the text elements in the first language and the property keys in association with the text elements is generated. Further, a second localized property code element comprising the text elements in the second language and the property keys in association with the text elements is generated. In an example the same property key is used for a text element in the first language and the second language.

The localized property code elements may be code segments including the text elements including further formatting information and similar in a particular language. Further, the localized property code elements may include the property keys for associating the respective text elements in with the code locations. The localized property code elements may be constituted by JAVA properties. The names and storage location of a property may be derived from context information available in the text element file.

In an operation 703 the functional code element may be linked with the first localized property code element corresponding to the first language using a first language identifier. Further, the functional code may be linked in an operation 704 with the second localized property code element including the text elements in the second language, using a second language identifier. The linking operation may be performed during a runtime execution of the software application, during an installation operation of the software application or during a compiled time or interpretation time of the software application, e.g. in the mapping process.

Accordingly, existing JAVA technology may be employed in providing localized versions of the software application, by using JAVA property keys included into the code and using JAVA properties. The desired JAVA property in a desired language may then be selected using a corresponding language identifier.

In the following, a further embodiment of the invention will be outlined with respect to Fig. 8.

Fig. 8 shows elements illustrating a process to link property code elements to a code using a language identifier, according to another embodiment of the invention.

Fig. 8 illustrates a code 800, e.g. including a code of the software application in a programming language such as C, C++ or any other programming language. The code includes three exemplary property keys PK1, PK2 and PK3. Of course, in practical examples, a larger number of property keys will be present. The property keys are preferably located at proper locations in the code, e.g. in correspondence to locations of three text elements as outlined above.

Further, Fig. 8 illustrates three text elements in a first language TE1(L1), TE2(L1) and TE3(L1) linked to the respective property keys. The text element TE1(L1), indicated at reference numeral 810, is linked to the code using property key PK1. The second text element TE2(L1) in the first language, denoted 811, is linked to the code using the second property key PK2. Likewise the third text element TE3(L1) in the first language 812 is linked to the code using the third property key PK3.

Further, Fig. 8 shows the three text elements in a second language TE1(L2), TE2(L2) and TE3(L2), denoted 820, 821 and 822. As already the text elements in the first language 810, 811 and 812, the text elements in the second language are linked to the code using the three property keys PK1, PK2 and PK3.

Thus, the first text element in the first language 811 and the second text element in the second language 821 the second language is linked to a location within the code using the first property key PK1, the second text element 812 in the first language and the second text element 822 in the second language is linked to the code using the second property key PK2 and likewise the third text element in the first and second language is linked to the code using the third property key PK3. Of course, further text elements in the first and second language may be provided.

The selection operation of the text elements in the first language or the second language may be effected by switching means 830 allowing a selection of the text elements in the first language or the second language using language identifiers ID1, ID2. The switching means may software based and/or hardware based.

Thus, a mapping process, receiving the language identifier for the first language ID1 as an input, will select the text elements in the first language 810, 811 and 812 for generating a localized version of the software application in the first language.

Likewise, a second localized version of the software application for the second language can be generated using the language identifier for the second language ID2 as an input to the mapping process.

The text elements 810, 811 and 812 may be included in a first localized property code element for the first language and the text elements 820, 821 and 822 may be included in a second localized property code element for the second language.

The linking operation may be performed during the mapping process, or in an operation prior to the mapping process.

In the following a further embodiment of the invention will be outlined with respect to Fig. 9.

Fig. 9 shows operations for obtaining translated text elements in preparation of obtaining localized versions of a software application according to an embodiment of the invention. The operations of Fig. 1 may be carried out using the embodiment shown in Fig. 1, however, Fig. 9 is not limited thereto.

In a first operation 901 relevant information from a text element file, as outlined with respect to previous embodiments, is extracted and imported into a database. This may include text elements with text information, layout information and similar.

The database may be located at a data processing unit such as data processing unit 900, or at any other computing or storage device. Further, the database may facilitate maintaining a large number of text elements for translation.

In an operation 902 translated text elements are obtained using for example a web-based tool, as outlined before.

In an operation 903 the translated text elements are merged back into the database, such that the text elements are available with the database in a plurality of different languages.

In an operation 904 the text elements from the database are used to generate localized versions of the software application. In this process, the text elements may be directly used to generate localized versions of the software application, or may previously be included into a text element file, as outlined before.

Alternatively, a text element file constituted by an XML file may be used and generating the translated text elements may include an XML editor like XML Spy or any other editor.

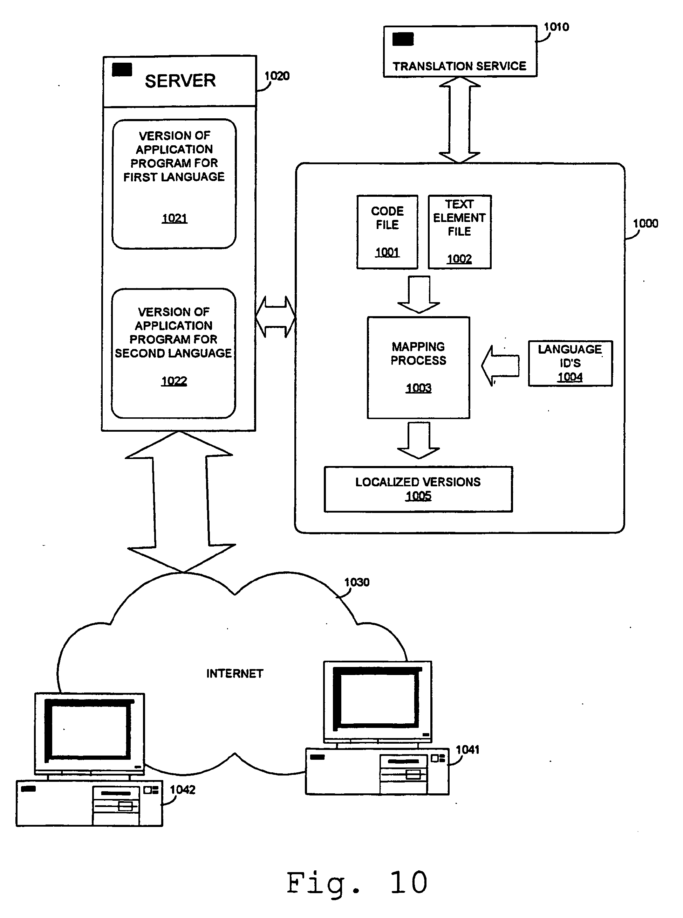

In the following a further embodiment of the invention will be outlined with respect to Fig. 10.

Fig. 10 shows elements of a system for providing and using localized versions of a software application according to another embodiment of the invention.

Fig. 10 shows a data processing unit 1000 including a code file 1001, a text element file 1002. Further, the data processing unit 1000 includes a mapping process element 1003 and means for storing the localized versions 1005.

For providing localized versions of the software application corresponding to the code available with the code file and the text element file, the mapping process may receive the code file 1001 and detect element file 1002, as outlined with respect to previous embodiments. Further, the mapping process may receive language identifiers of the different languages for the localized versions, denoted 1004 in Fig. 10. The mapping process may provide localized versions 1005 of the software application, as outlined before.

Fig. 10 further shows a translation service 1010 accessible from the data processing unit 1000, for obtaining translated text elements, as outlined with respect to previous embodiments.

Even though the code file 1001, the text element file 1002, the mapping process element 1003, the language identifier 1004 and the localized version 1005 are shown to form an integral part of the data processing unit 1000, in an alternative example at least one of the above elements may be provided at an external location, accessible from the data processing unit 1000 through a communication link.

The translation service 1010 may be accessed from the data processing unit 1000 through any kind of communication link, e.g. the Internet, or the translation service may be provided internal to the data processing unit 1000.

After generating localized versions of the software application, e.g. as outlined before, the localized versions may be transferred to a server denoted 1020 for client access. The server 1020 may be a large data processing device or a group of data processing devices serving a plurality of client units. Two exemplary client units are shown, denoted by reference numeral 1041 and 1042. Of course, in practical examples, a larger number of client units may be present.

The localized versions generated in the mapping process may be transferred to the server unit 1020. As an example, two localized versions of the software application denoted 1021 and 1022 are shown in Fig. 10. The software application may be any application for accessing or manipulating information, such as a text processing application, spreadsheet application, a scientific or engineering application are similar, as outlined before.

The server can be accessed from the client units 1042 and 1041 through a network such as the Internet denoted 1030. Further, the client units may, in accordance with a language preference, launch an instance of one of the versions of the application 1021 and 1022.

In another example, if a network is not available, the localized versions of the software application may be provided to remote data processing devices using a data carrier or similar.

In a further example the data processing unit 1000 may be directly connected to the client unit 1042, e.g. through the internet 1030, and the mapping process 1003 may take place at the client units 1042 or 1041. For example, the code file could be constituted by a JAVA applet or code fragment and the text element file 1002 could be constituted by a JAVA property, as outlined before.

During operations, the JAVA applet and the JAVA property could be transferred to one of the client units 1041 and 1042, e.g. upon user request, and, at the client unit, the mapping process could generate a desired localized executable version of the JAVA applet based on a language identifier of a desired language. The language identifier may be pre-defined at the client unit, or inserted during a runtime.

In another example a computer-readable medium may be provided having a program embodied thereon, where the program is to make the system of data processing devices shown in Fig. 10 to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment a data processing unit for providing localized versions of a software application may have the following elements.

1) Data processing unit for providing localized versions of a software application with text elements, comprising:

a code section having instructions to access a code of the software application associated with a plurality of text elements in a first language;

a code section having instructions to obtain translations of the text elements in a second language; and

a code section having instructions to associate the text elements in the second language with the code;

a code section having instructions to effect provision of a first localized version of the software application for the first language and a second localized version of the software application for the second language based on the code associated with the text elements in the first and second language.

2) Data processing unit of 1), wherein the text elements are provided at specified positions within a code file including the code and a code section having instructions to merge the translated text elements in the second language into the code file at the positions of the corresponding text elements in the first language.

3) Data processing unit of 1), including:

a code section having instructions to collect the text elements in the first language;

a code section having instructions to store them in a text element file; and

a code section having instructions to merge the translated text elements in the second language into the text element file.

4) Data processing unit 1), including a code section having instructions to link each text element in the first language to a location in the code with one of a plurality of property keys.

5) Data processing unit of 4), including a code section having instructions to link the translated text elements in the second language with the property keys of the corresponding text elements in the first language.

6) Data processing unit 1), including a code section having instructions to associate the text elements in the first language with a first language identifier and the text elements in the second language with a second language identifier.

7) Data processing unit of 3), including a code section having instructions to include into the text element file context information comprising at least one of language identifiers and property keys.

8) Data processing unit of 1), including:

a code section having instructions to obtain a functional code element of the software application including a property key for each text element at respectively specified locations;

a code section having instructions to generate a first localized property code element comprising the text elements in the first language and the property keys in association with the text elements;

a code section having instructions to generate a second localized property code element comprising the text elements in the second language and the property keys in association with the text elements;

a code section having instructions to link the functional code element with the first localized property code element using a first language identifier; and

a code section having instructions to link the functional code element with the second localized property code element using a second language identifier.

9) Data processing unit of 8), including a code section having instructions to perform the linking operation during runtime execution of the software application.

10) Data processing unit of 8), wherein the property code elements are constituted by JAVA properties and the property keys are constituted by JAVA property keys.

11) Data processing unit 1), including a code section having instructions to start a mapping process in order to provide the localized version of the software application for the first language, the mapping process receiving the first language identifier as an input.

12) Data processing unit of 11), including a code section having instructions for one of a compilation and an interpretation of the code.

13) Data processing unit of 1), including a code section having instructions to generate an input file including at least one of:

- language identifiers;
- file names of the localized version of the software application;
- text elements in the first and second language; and
- property keys associated with the text elements.

14) Data processing unit of 3), including a code section having instructions to obtain translation text elements by extracting relevant information from the text element file and to import the information into a database; and a code section having instructions to merge the translated text elements are back into the text element file.

15) Data processing unit of 1), including a code section having instructions to obtain the translated text elements using a web-based tool.

16) Data processing unit of 3), wherein the text element file is constituted by an XML file and wherein generating the translation text elements includes an XML editor.

17) Data processing unit of 1), wherein the text elements include at least one of:

- menu items of a display screen;
- text elements of a display screen;
- a runtime message for a user;
- help information;
- installation information on the application program;
- language dependent symbols;
- language dependent formatting information;

- language dependent layout information; and
- language dependent code sections of the code.

A further embodiment relates to database application methods and programs for localizing software, translating texts contained therein and to support translators in localizing software and translating texts. It also relates to a translation apparatus for localizing software, translating texts and supporting translators.

Conventional translation programs try to translate texts on a "sentence by sentence" basis. Such conventional translation programs encompass the analysis of the grammatical structure of a sentence to be translated and the transfer of it into a grammatical structure of a target language sentence, by searching for grammar pattern in the sentence to be translated. The text to be translated can also be called the source language text. This is usually done by analyzing the syntax of the sentence by searching for main and subordinate clauses and so on. For this purpose the single words of the sentence have to be analyzed for their attributes, just like the part of speech, declination, plural, case and the like. Further, conventional translation programs try to transform the grammatical form from the source language grammar to the target language grammar, to translate the single words and insert them in the transformed grammatical form. If the translation program works correctly, the translated sentence exactly represents or matches the sentence to be translated. One difficulty is that the translation of many words in the text to be translated is equivocal and represents many different words in the target language. Therefore, as long as translation programs cannot use thesauruses specifically adapted for detecting the correct semantical expressions and meaning of sentences, according to the context, machine translations are imperfect.

Another drawback of the above mentioned translation programs is that especially slang and slang grammar is not translatable, as slang uses grammar rules different from the standard grammar rules. Additionally the complex grammar rules are difficult to describe with mathematical laws and therefore require huge calculation costs even for simple sentences. Additionally, ambiguous source language sentences are especially difficult to translate into target sentences with the same ambiguous grammar structure.

Another drawback of the conventional translation programs is the fact that the translation performance is limited, and stays limited, and except of update options for the dictionaries and the grammar rules, the conventional translation programs are limited in their performance. Conventional translation programs are not adaptive, and repeat the same translation errors, as the user cannot change the grammar rules by himself without risking a total breakdown of the translation apparatus.

Another problem is connected with software localization, i.e. the adaptation of software to a certain local, geographic or linguistic environment in which it is used.

Such a localization must be done with internationally available software tools in order to ensure proper function with users coming from different cultural and linguistic backgrounds.

Such problem is also related to the fact that different translators work simultaneously on different aspects of a software. So e.g. one team translates the text entries in a source code of a software, another team translates the manuals, while a third team translates the "Help" files. To achieve a correct localized version of a software it is beneficial that the three teams have to use the same translations for same words so that the manuals, "Help" files, and the text elements in the software itself consistently match each other. To achieve this, the teams conventionally have to lay down the keywords and the respective translations used in the software. This is time consuming and requires a good communication between the teams.

It is desirable to have a method, program and device which is capable to translate, or support translators, in localizing software and software related texts with low calculation requirements, a reasonable exploitation of synergistic effects and the capability of consistent translation in both the software and the related text parts, such as manuals, Help files and so on.

It is further desirable to have a method, program and device which is capable to adapt the text translations of software related texts even to an unusual use of grammar and words.

It is further desirable to have a method, program and device which is capable to localize software and/or to support people in localizing software.

According to an embodiment a method for localizing software is provided. The method localizes the software by adapting the language of texts in a source code of said software by extracting text elements from the source code. Next, untranslated text elements are searched in said extracted text elements. Translation elements are retrieved for each untranslated text element, e.g. by searching a database with pre-stored matching source text elements and respective translations. The next operation is related to associating said searched untranslated element of the source language with said retrieved translation elements, if such translation elements are found.

In this embodiment the method supports a software localizer (or user) by offering one or more possible translations of a text element contained in the source code of a software program. In this way the user can simply perceive the translation proposals retrieved from a database. The method ensures the adaptability of different software to certain cultural, geographic or linguistic environments.

In another embodiment the method further comprises the operations of validating said retrieved translation elements, and merging said source code with said validated translation elements.

With these steps the user can easily decide if he wants to accept (validate) or discard the suggested translation. The validation of the suggested translation may be executed automatically, if the user has validated the same translation element in another section of the source code. Merging the source code with said validated translation elements, finally indicates the enlargement of the one language text elements in the source code with the validated other language(s) translation elements. The merging may be executed preferably after translation of the whole text.

In another embodiment, the method further comprises a compiling operation to compile said merged source code to generate a localized software in binary code. This software preferably comprises one or more text libraries in languages different from the language of the original source code. The operation of compiling can be the last operation in the generation of a localized software version, dependent on the programming language. Preferably an additional operation of binding may be executed when the programming language requires the binding of sub-modules or sub-libraries after compilation. In this case the compiling operation is followed by one or more binding operations. Dependent on the programming language, the operation of compiling can be an assembling operation.

In another embodiment, the method for localizing software further comprises an adaptation of the language of texts related to said software, e.g. manuals, Help files, etc. for illustrating the use of said software and supporting the user accordingly. Software is often provided with additional texts such as "Help"- files, manuals, packaging prints and the like, these texts being provided with translations matching with the translations used in the source code of the software. The translation of software related texts may be executed by the additional operations of: searching untranslated elements of the software related text, retrieving translation elements for each untranslated text element of the software related text on the basis and in accordance with the association of said retrieved source code translation elements, and associating said untranslated elements of the software related text with said retrieved translation elements. Thereby it is ensured that a consistent translation is performed within both the translation of source code texts and of software related texts.

It is to be noted that the operation of retrieving translation elements for each untranslated text element of the software related text on the basis of the association of said retrieved source code translation elements may include that said associated source code translation elements may have been previously validated, merged or even compiled, with a preference on the validated entries.

It is to be noted, that the operations of the method for localizing software and translating software related texts can be executed successively, interleavingly and/or even simultaneously. The method may be executed in a local area network (LAN), wherein different teams of translators access and/or retrieve the translation suggestion from the same table and/or dictionary and/or library and/or storage unit. To simplify the access and to standardize the translation of a software, the storage unit may be related to a single language software localization, i.e. there is one translation sub-dictionary for each language in the localized software version. This feature may be combined with a composed translation dictionary structure, so that a number of keywords are stored in and retrieved from a localization specific database, by which keywords of minimum requirements are defined. Text elements not containing said keywords can be retrieved from a common database.

According to another embodiment a method for localizing software related texts is provided by which - dependent on or irrespective from the translation of software source code - text elements are translated. The method utilizes text elements of said software related text and their respective translations stored in a database. First, all untranslated text elements are searched in said software related text. Next, translation elements are retrieved for an untranslated text element, e.g. by searching a database with pre-stored matching source text elements and respective translations. Associating said searched untranslated element of the source language with said retrieved translation elements is done, if and after such translation elements are found.

In this embodiment the method supports a translator by offering one or more possible translations of a source text element. The user or translator can easily decide if he wants to accept or discard the suggested translation. The main difference to conventional translation programs is that the grammar of the source text element is not checked. This is not necessary, as only the text structure of the source language has to match a previously translated text element. It is like using an analphabet for comparing a pattern (the source text element) with previously stored patterns, in a card index and attaching a respective file card (with the translation element) at the place the pattern was found in the source text. Then a translator can accept or discard the index card, instead of translating each text element by himself, thereby improving his translation speed. The performance of the pretranslation is therefore only dependent on the retrieving speed of the file card and on the size of the card index, and not on the linguistic abilities of the user performing the translation. In another embodiment two or more users may sweep the card index the same time. Additionally, in another embodiment, the users can take newly written index cards from another user and sort them into the card index.

In an embodiment the associating is executed by entering said retrieved translation elements into a table. The use of tables will simplify the processing of the text elements and enables the developers to use database management systems (DBMS) to realize this embodiment in a computer. The use of tables can further simplify the access of retrieved translation elements, if they are retrieved from a database.

The use and the interaction of tables in a database are well known and easy to handle tasks in databases, especially if the tables comprises pre-defined translated phrases compared to an ambiguous grammar analysis. The transfer to tables of a database offers additional benefits, as comments, markings and even translation related background information, like language code, translation code and the like can be stored in additional columns in the table. With the "patterns" stored in columns the job of users performing the translation in above example is simplified by just taking the next pattern in the column, and no longer searching for the next patch in a patchwork.

According to another embodiment, the operation of retrieving translation elements comprises the operation of comparing each untranslated text element with entries of a dictionary database.

According to another embodiment, the received translation element is entered in at the location of said untranslated text element or in proximity of said untranslated text element. So the translated element may replace the untranslated text element. The translated element can be placed below the untranslated element. The translated element can e.g. be entered in a field element adjacent to the field element of an untranslated text element, if a table is used for the translation method.

According to another embodiment a translation method further comprises displaying of matching translation elements to a user, and waiting for user input indicating a validation of a specific matching translation element. The validation can be executed by a user entering a valid translation element by himself.

According to another embodiment the translation method further comprises a operation of editing said received translation element, by user input, prior to said validation.

The user can accept or discard entries in the pretranslation table by interaction. The interaction with a user includes different advantages. First a user can decide by himself if he wants to accept the proposed entry. Second, if multiple entries are proposed the user can select the best one, or even select one of the proposed lower rated translation suggestions and adapt it to the present text to be translated. The user can choose if he wants to select one of the proposed translation elements in the pre-translation table, or if he wants to translate said text element by himself.

According to another embodiment, the translation method comprises updating said dictionary database with said validated translation element. By updating the database with new text elements and translation entries the database is extended and improved. This extension can be executed automatically e.g. by automatically updating the dictionary database with the validation of a translation element. The updating of the database can be executed according to different procedures. In one embodiment, the database updating can be executed by transferring all validated translation elements from the user device to the database, so that the database itself can decide if that validated translation element is already stored, or is to be stored as a new translation element. In another embodiment, the updating of the database may be executed by transferring only newly generated database entries to the database. It may be noted that it may be advantageous that a user, a user device, or the database checks if a validated text element/translation element pair is already present in the database, to prevent a rising number of similar or identical entries which must be avoided. To prevent that invalid translation elements can be dragged into the translation database, the updating of the translation database may even be accomplished by an additional validation process initiated from a second translator. The second validation can easily be executed, as the translator for the second validation only has to decide if a translation element matches the respective text element or not. It can also be possible to discard certain translation proposals as invalid by a user input, to prevent that the system offers this translation element a second time. This feature can be embodied as a negative key ID"- entry in a certain column of the translation table.

According to another embodiment, an index is generated in an additional operation indicating the grade of conformity of an element of the text and of the dictionary database. This index is useful, if the text element to be translated and the text entries stored in the database differ only slightly, so that a translator may easily derive a correct translation from a slightly different database entry. The depiction of an index describing the matching of an untranslated text element and a translated text element can be described as fuzzy matches. The generated index may be described as a "fuzziness" index of the matching element.

According to a further embodiment, the number of entries in the said pretranslation table of one text element is related to the grade of matching. The number of matching translations to be retrieved from the translation database has not been limited until now, so that more than one matching entry of the database may be retrieved. If more than one entry can be found, the number of retrieved entries may be limited to a predetermined value of the matching grade index. Alternatively, the number of retrieved database entries could be limited by a predetermined value. Both limits prevent that a human translator has to face a too big number of translation proposals. The number of translation proposals can be limited by a predetermined value e.g. of the matching index. If the predetermined matching index is set to zero, the user in the above example would retrieve the whole database for each source text element in the table.

In another embodiment, a translation entry of the source language text element entry is accepted as valid translation automatically, if said index indicates an exact match of said untranslated text element with said source language text element entry. This option automates the above mentioned translation support method to an automatic translator for text elements with exactly matching database entries. This automatic translation method may even economize the translator, if the texts to be translated are limited to a small lingual field combined with a huge database. Huge databases suggest a centralized use of the translation method in computer networks such as local area networks or the internet. This would enable a fast generation of a huge universal translation database, if any net user can access the database for translation tasks improving the database with each accepted translation. To prevent abuse of the database the entries may be marked as authorized by the translators of the provider.

According to a further embodiment, the method comprises a marking operation of translated or untranslated or partially translated text elements. The markings can be used to indicate the status of the translation, distinguishing between different grades of translations e.g. fully, partially, or untranslated. The makings may be incorporated in the text, or may be added in a separate column into the translation table. The makings can be used to indicate if the specific table entry has been translated by a translator, or is an automatically generated proposal, and the like. The markings are especially useful, if the front-end used by the translator depicts the table entries as a conventional text without a visible table structure. The markings can be colored text, colored background, bold or oblique depiction of the text, bold or colored tables or frames and the like.

Markings of the table entries may indicate e.g. a number of how often this database entry has been used or has been accepted by a translator. The markings may indicate e.g. the differences between the translation suggestion and the actual text, to simplify the work of the translator. The marking may mark a single word differing in the database entry and in the translation. The marking may indicate the quality of the suggested translation. The marking may even indicate the similarity to pre-translated database entries, so the user may recognize if the user selected an unusual grammar or word translation. A marking can be applied to the source text, indicating a grammar structure, so that e.g. the main clause is marked with one color and the subordinate clauses in another color. Or the flexion of subordinate clauses to words in the main sentences may be indicated.

According to another embodiment, the text elements are texts. Whole texts or text sections or paragraphs include the advantage of fast translation if such a paragraph can be found in the database. The expected drawback, that whole texts stored in a database would exceed the limits of any database can be ignored, as most translations especially of technical texts or of letters include few but very similar text sections. These sections can be e.g. addresses, warranties, terms, "Help" files, conditions of trade and the like.

According to a further embodiment, the text elements are sentences. The text elements can be whole sentences or main and subordinate clauses, or simply phrases, depending on the selection of the single text element. The longer the text element is the better the translation can be expected to be, and the bigger the related database is. It could be expected that the sentence is an ideal text element, and this is the shortest logically independent language unit. The use of main and subordinate clauses may be used especially in translations from English to Japanese or from French to German to simplify the correct use of pronouns and reflexives.

In another embodiment, the text elements are words. This would be easy to implement even in relatively small databases, for supporting a translator in translating a text by providing the translations of the single words of a sentence in the source language text. Even big translation dictionaries can be stored in relative small storage mediums. The person using this feature only has to select the correct translation of the proposed word translation and adapt the grammar of the source language to the target language, thereby rendering the use of dictionaries obsolete. The dictionary function can be combined with the above mentioned index feature, indicating how often a special translation has been selected.

It is to be noted that the single text elements could be stored in any logical form in the database. For example a text may be present as a tuple of key identification numbers of sentences, and/or the texts and sentences may be present as a tuple of key identification numbers of words and/or grammar reference. The texts, words and/or may be present as single texts in the database. The structure of the conceptual level or the internal level of the database is not important for the method.

According to another embodiment, the various above mentioned text elements are combined to a single translation method. In this method the database is first searched for text sections, then for sentences and finally for words. The three searches may be executed successively with or without intermediate user interactions. In the first case the user first checks the suggested text sections, then the computer searches for translations of sentences, to be checked by the user and finally, searches for single words to be finally checked by the user. The computer may successively check the three hierarchic levels of text elements, preferably only continuing in a lower hierarchic level if no suggestion has been found in the higher hierarchic level, leading to a mix of suggested text section-, sentence- and word translations. To clarify such a mix of suggestions a front-end of the translation support program may mark the hierarchic level of the suggested translation. It can be compared with cutting down a groove: You can first cut all trees, then cut all branches, or you could cut down each tree, cut its branches, cut down the next tree, and so on. Equally the translation program may first compare all text sections with the database, then all sentences, and next all words, or may compare a text section, next compare all sentences of said text section, if the text section could not be found in the database, continuing by checking the database for all sentences in that text section, and continuing by searching all words in the database of sentences that could not be found in the database. The search for text sections or for words may be economized. With these combined features a translator can easily utilize a database to generate a pretranslation simply and fast relieving him of the duty to thumb dictionaries and grammar books for translating.

According to another embodiment a method for localizing software, translating texts, or supporting the translation of texts, further comprises processing of text elements and translated text elements stored in said database. The processing can be a preprocessing to transfer an arbitrary source text to a database table, including such operations as converting different text files to a file format used in the database to simplify the retrieving of matching database entries. Similarly, a translated text in the database can easily be transformed to an arbitrary file format. The transfer of the text to a table requires splitting the source text to single text elements. The processing can be a post processing e.g. by applying statistics to extract translation rules. By means of statistics, analyzing e.g. the behavior pattern of a user, a translation device may be enabled to translate sentences by itself. So the method may comprise analyzing the user input, on a certain difference patterns, of source text and database entries, enabling the method to generate translation suggestions assembled from database entries and user input patterns. The method may further comprise transferring operations texts to and from a database. This offers multiple and useful options. With this option the pretranslation of the source code text can be simplified as the source code text can be entered as text elements in a database compatible form, i.e. a table.

According to another embodiment, a method for localizing software, translating or supporting translations further comprises the operation of sorting said text elements. A sorting operation could be performed prior or posterior to the generation of translation suggestions. So, a user may sort the text elements e.g. of the source text in an alphabetic order, sort the source text for certain "keywords", and the like. A special application of a sorting operation can be to sort the sentences according to grammar structures, the length of sentences or the number of words or characters used in a sentence. By sorting grammar structures, the method can be used to simplify the translation and the use of the method. The simplification resides in,the fact that the translator starts e.g. with simple grammar structures working himself through to the complex grammar structures. This enables a user to practice with simple sentences to be prepared for complex sentences. The user may adapt the order of the sorting e.g. by transferring a text element to the end of a sequence in the order.

According to another embodiment a software tool for enabling and/or supporting a user in translating of texts or localizing of software is provided. The software tool comprises program code portions for carrying out the operations of the above mentioned methods, when said program is implemented in a computer program. The software tool can be implemented e.g. in a database management program (DBMS) to offer the user additional translation features. The software tool can be implemented into a translation program to offer a combination of the features from conventional features and features according to the described embodiments. The combination of a conventional translation program and a program according to the present examples would enable a user to use an intelligent and adaptive translation program, the performance of which increases with the number of translated sentences. A combination of a conventional translation program and an embodiment may utilize an additional grammar filter, to check e.g. the source text and the user input to prevent errors in the translation, and to improve the quality of a translation by marking the translated passage in the text with an "equivocal source text"- mark.

According to another embodiment a computer program for enabling and/or supporting a user to translate texts from a source language or localizing software by means of a database, comprises program code section for carrying out the above operations of the above methods when said program is run on a computer or a network device.

According to a further embodiment a computer program product is provided comprising program code sections stored on a computer readable medium. The computer program code sections are for carrying out the above mentioned translation and software localization method when said program product is run on a computer or network device.

According to yet another embodiment a computer device for executing software localization, translation or translation support tasks is provided. The computer device is programmed for carrying out the above mentioned translation methods. Said computer device could be a network connected in and an output device transferring source language texts via a network to a centralized translation database. This computer device can be a database device for translation purposes. The device may be equipped with a scanner.

According to another embodiment an apparatus for localizing software by adapting the language of text contained in a source code of the software is provided. The apparatus comprises a component for extracting text elements from the source code, a component for searching untranslated elements of the extracted text elements, a component for retrieving translation elements for each untranslated text element and a component for associating the untranslated elements of the source code with the retrieved elements. The component for retrieving translation elements may be a component for searching translation elements within a database with pre-stored matching source text elements and respective translations. The component for associating the searched untranslated element of the source language with the retrieved translation elements is operated if such translation elements are found. Otherwise the searching operation is continued or the user is informed.

According to another embodiment of the present innovation an apparatus for localizing software related text by adapting the language of the text is provided. The apparatus comprises a component for searching untranslated elements of the extracted text elements, a component for retrieving translation elements for each untranslated text element and a component for associating the untranslated elements of the source code with the retrieved elements. The component for retrieving translation elements may be a component for searching translation elements within a database with pre-stored matching source text elements and respective translations. The component for associating the searched untranslated element of the source language with the retrieved translation elements is operated if such translation elements are found.

According to another embodiment an apparatus for translating texts elements by means of a database, comprises:

- a module to communicate with said database,
- an interface for exchanging data,
- a processing device for retrieving elements from said database.

According to another embodiment the apparatus further comprises a dictionary database.

The apparatus can be a network device communicating via said network with a database and a user or terminal device for user input. The apparatus can comprise a built-in or an external database. The apparatus can be a network device, a terminal device, an independently operable user translator. An independently operable user translator may comprise a scanner to simplify the transfer of the source text to the translator. The scanner may be able to perform screenshots of a user device, so that a user may be able to translate sentences depicted on a computer or television monitor. This would offer e.g. an "instantaneous subtitle translator" for the use with a TV.

The dictionary database provided can contain the data of a sentence based dictionary. The database, especially a database containing a sentence based translation dictionary can be applied in translation devices, or to extend the abilities of an existing conventional translation device.

The apparatus can be a sentence based dictionary for translation purposes. The difference to conventional dictionaries is that the translated units are not words and but whole sentences. It is apparent that such a dictionary, if printed as a conventional book may be larger than the "encyclopedia Britannica" and could appear a bit bulky, but would require only a single access per sentence, without the need of checking the grammar. The dictionary is incorporated in an electronic book, simplifying the access, and reducing the weight and improving the user interface of the dictionary. Said electronic dictionary may even comprise a scanner for simplified source language text input.

Another embodiment provides a network system for enabling and/or supporting at least one user to localize software by translating texts in said software by means of a database. The network system comprises at least one of the aforementioned translation or software localization apparatuses, and at least one translation database for exchanging data with said at least one apparatus. The software to be localized can be transferred to the apparatuses via the network, too.

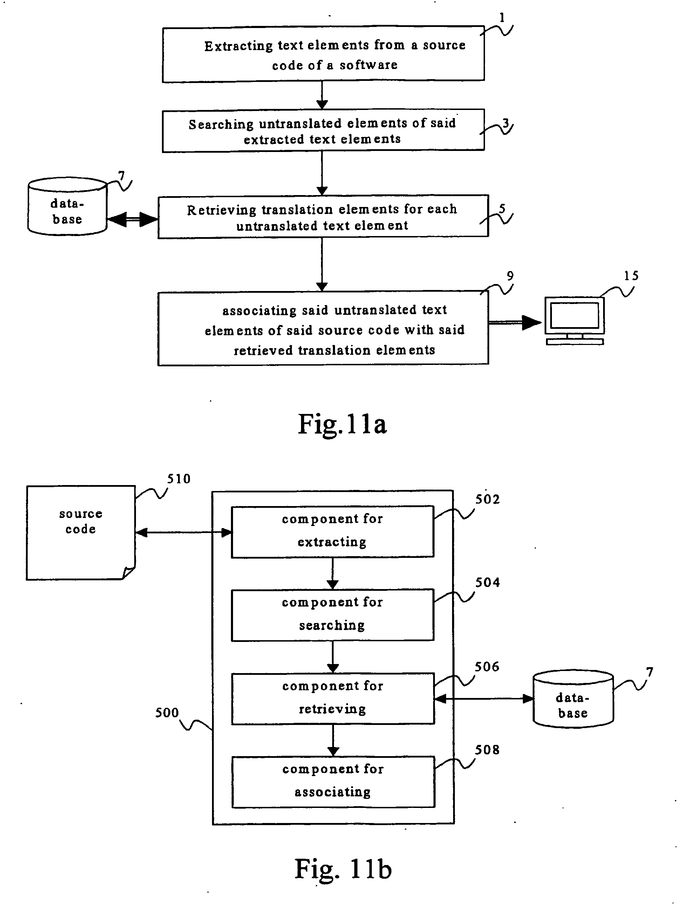

In the following an embodiment will be describe with respect to Figure 11a. There are shown the operations of a method for localizing software by changing, adapting or translating the language in a source code of said software, e.g. by translation, wherein the method comprises:

- extracting text elements from said source code of said software, in operation 1;
- searching untranslated elements of said extracted text elements, in operation 3;
- retrieving translation elements for each untranslated text element, in operation 5;
- associating said untranslated elements of the source code with said retrieved translation elements, in operation 9;

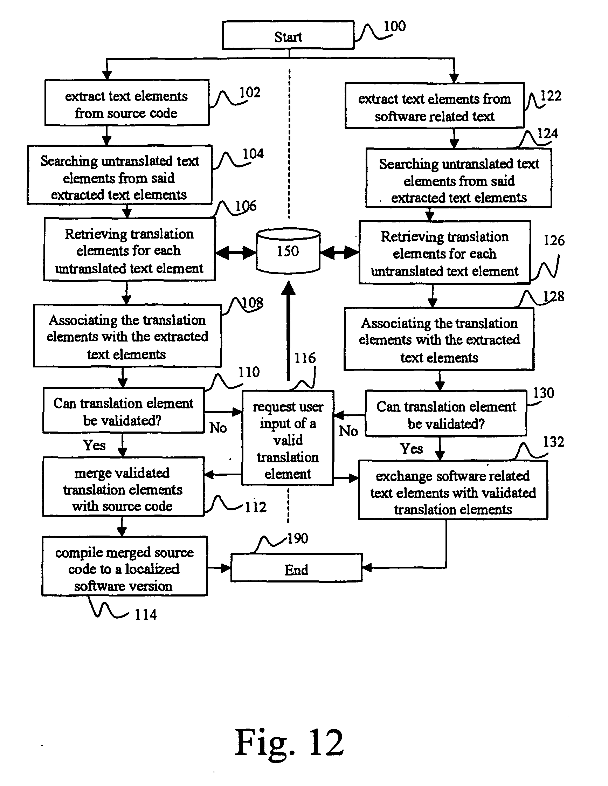

In this basic method, the translation elements can be retrieved from a database 7. The associated untranslated elements and the translation elements can then be transferred to a user interface to be displayed on a screen 15. This basic method for translating texts can be extended to the method described in figure 12.

Figure 11b shows a block diagram illustrating an embodiment of an apparatus for localizing software by changing, adapting or translating the language in a source code of software, e.g. by translation.

The apparatus 500 comprises a component for extracting 502 text elements from a source code 510 of the software. The component for extracting 502 may be constituted by a data processing device or a program section executed at a processing device. Moreover, the component for extraction 502 may be realized by a code section containing instructions for extracting. The text elements may be extracted from the source code of the software according to the operation 1 shown in figure 11a.

Further, the apparatus 500 comprises a component for searching 504 untranslated elements of the extracted text elements. The component for searching 504 may be constituted by a data processing device or a program section executed at a processing device. Moreover, the component for searching 504 may realized by a code section containing instructions for extracting. The untranslated elements of the extracted text elements may be searched according to operation 3 shown in figure 11a.

Further, the apparatus 500 comprises a component for retrieving 506 translation elements for each untranslated text element. The component for retrieving 506 may be constituted by a data processing device or a program section executed at a processing device. Moreover, the component for retrieving 506 may realized by a code section containing instructions for extracting. The translation elements can be retrieved from a database 7. The translation elements may be retrieved for each untranslated text element according to operation 5 shown in figure 11a.

Further, the apparatus 500 comprises a component for associating 508 the untranslated elements of the source code with the retrieved translation elements. The component for associating 508 may be constituted by a data processing device or a program section executed at a processing device. Moreover, the component for associating 508 may be realized by a code section containing instructions for extracting. Untranslated elements of the source code may be associated with the retrieved translation elements according to operation 9 shown in figure 11a.

Figure 12 depicts a flowchart of a software localization and related text translation method according to an embodiment. In the figure the method is divided by a dotted line separating a branch 102 to 114 describing the localization of the software from a branch 122 to 132 describing the translation of software related texts. The method depicted in figure 12 starts with a start element 100. The start element provides the presence of a software source code and or a software related text. As described in figure 11a, both branches start with an extraction operation 102, 122 to extract text elements from the source code and/or from software related text. In a next operation said extracted text elements are searched for untranslated text elements in the operations 104, 124. In the next operations 106, 126 translation elements are retrieved for each untranslated text element from a database 150. Both branches, can access the same database 150 to retrieve the translation elements. Accessing the same database comprises the advantage that both translations are based on the same set of keyword translations. It can therefore be prevented that the manual describing an icon calls it e.g. "Memory" while the same icon in the user interface of the software is called "Storage". So this method for localizing software prevents the occurrence of inconsistencies between e.g. the software and the manuals. The same unambiguous expressions are used for denominating the same notions.

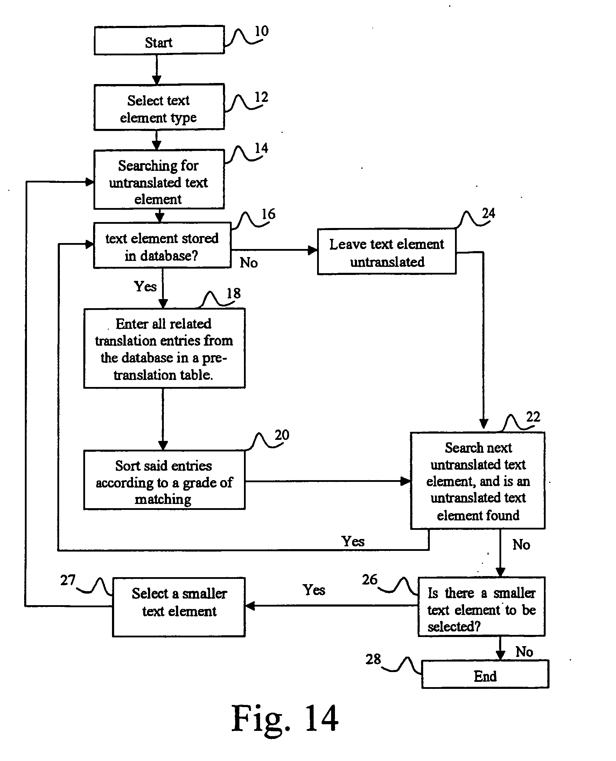

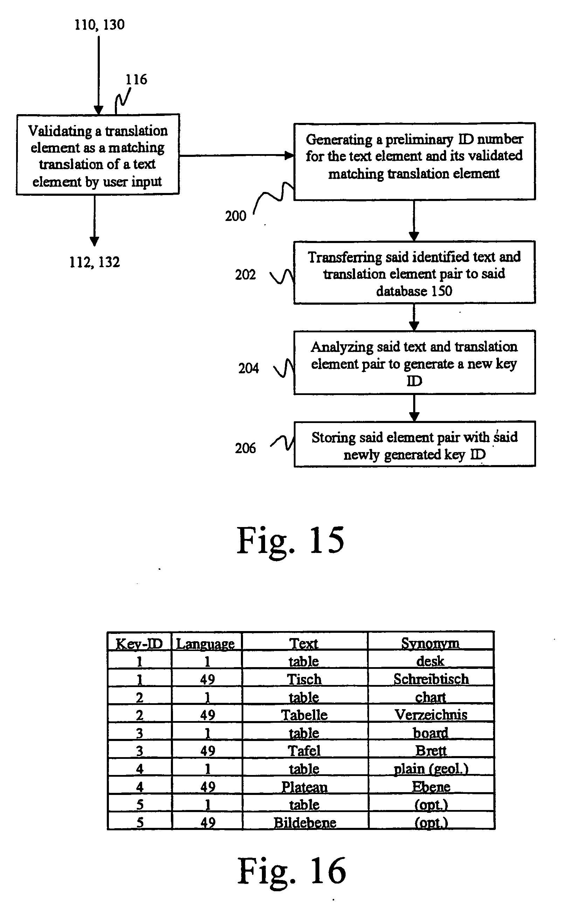

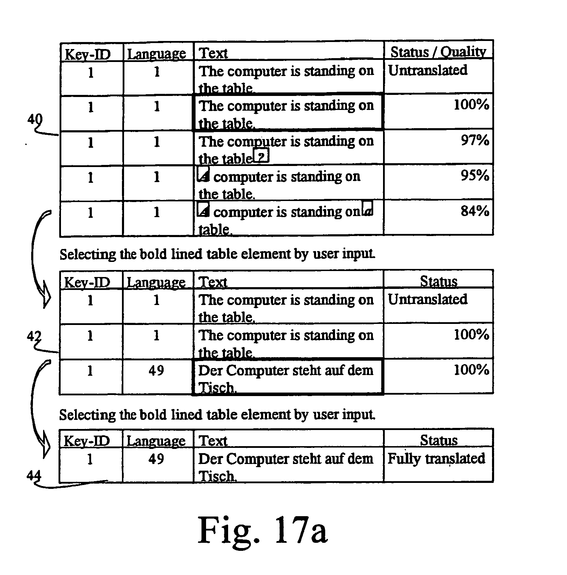

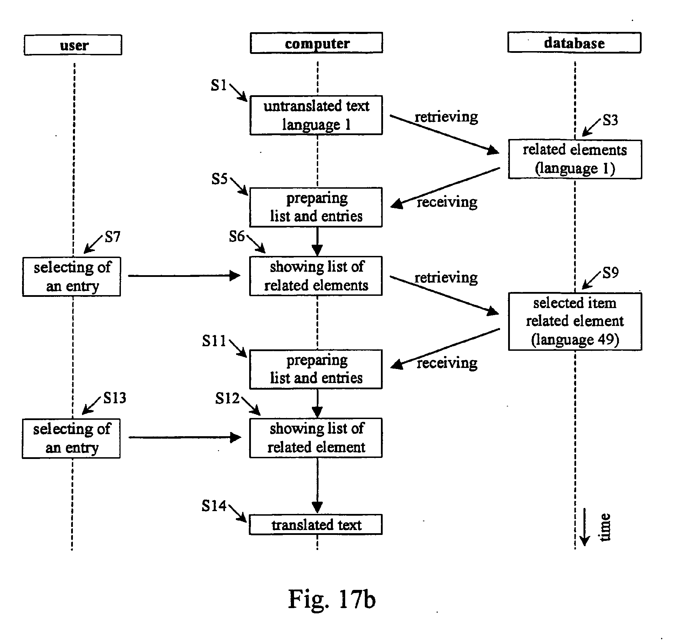

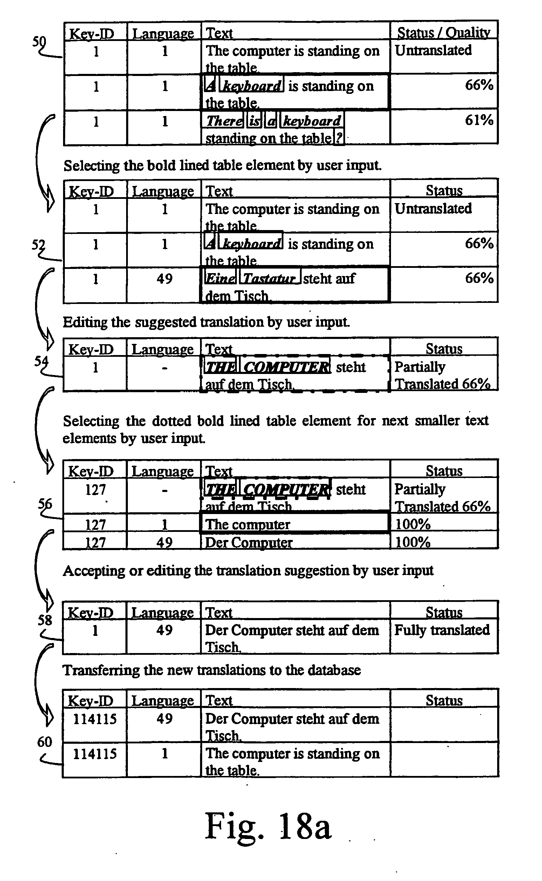

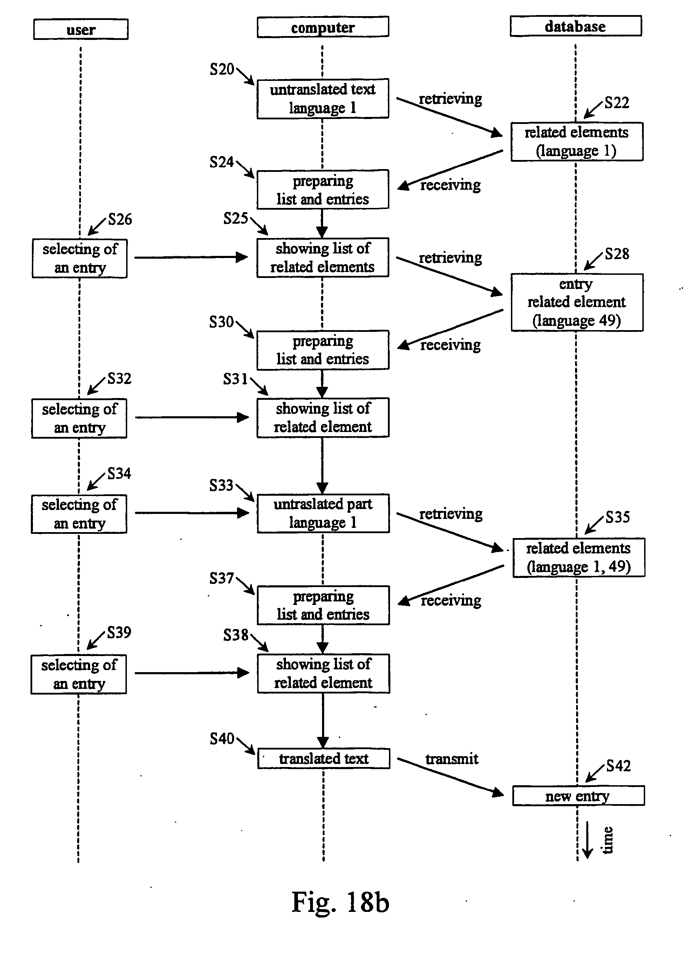

The operations 108, 128 describe the association of the text elements and the translation elements. As described in the following, this may include the use of pre-translation tables as depicted in the figures 17a, 17b, 18a and 18b. It is to be noted that the software source code translation and the software related text translation may be executed with the same or with different translation tables. The operations 110, 130 describe a validation of translation elements. The validation may be executed automatically (or manually by user input). If none of the proposed translation elements can be validated, the method requests a user input of a valid translation element, in operation 116. With the user input of a valid translation, the method can access a new pair of translation elements, that may be utilized in the translation of the other branch. This updating (depicted as the arrow between operation 116 and the database 150) results in a growing database 150, with an increasing number of entries and an increasing precision of the translation proposals. One possible updating procedure is depicted in figure 15. It should further be noted that the method of both of the branches may be executed in an interleaving fashion, as above described e.g. in the description of figure 14.

It should further be noted that the temporal distribution of the execution of the operations is not important. Therefore, the flowchart may be executed by first localizing the software, and then translating the software related texts, wherein the translation of the texts is determined by the translations previously used for the localization. The flowchart may also be executed by first translating the software related texts, and then localizing the software, wherein the localization of the software is determined by the translation previously used for translating the software related texts. The flowchart may also be executed by simultaneously translating the software related texts and localizing the software, wherein the first validation of a translation element determines the following translations. This embodiment enables two teams to work simultaneously on localizing a software and its manuals, economizing the operations of determining a translation catalogue of key words.

If all translation elements are valid, these are merged (in the first branch) with the source code of the software in operation 112, and the source code of the software is compiled (or assembled) to a localized software version in operation 114. If all translation elements are valid in the second branch they are exchanged with the related text elements of the software related text in operation 132. Then the localization of the software is terminated in operation 190.

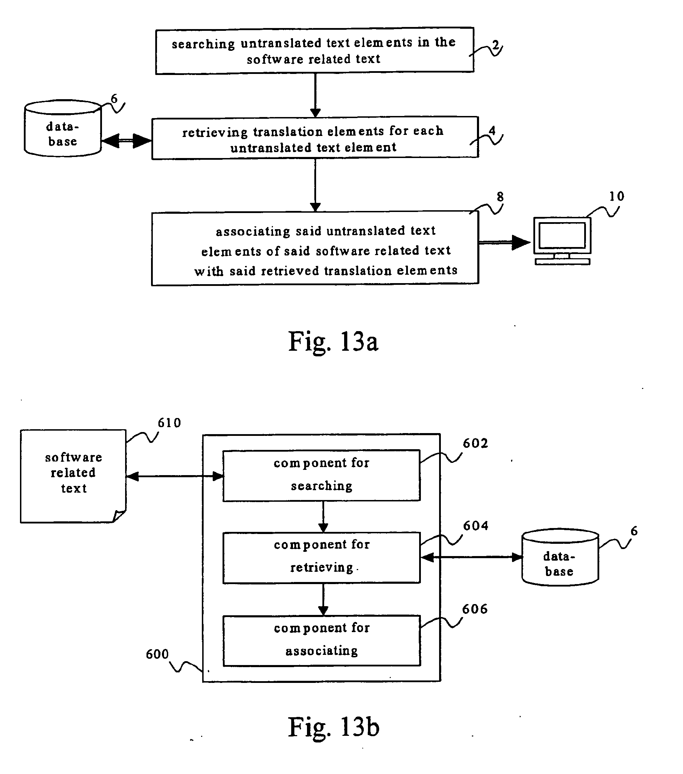

Figure 13a shows a flowchart according to one embodiment. There are shown the operations of a method for translating elements of a source language text, wherein the method comprises

- searching untranslated elements of the source language text in operation 2,
- retrieving translation elements for each untranslated text element in operation 4,
- associating said searched untranslated elements of the source language with said retrieved translation elements in operation 8.

In this basic method, the translation elements can be retrieved from a storage unit 6. The associated untranslated elements and the translation elements can then be transferred to a user interface to be displayed on a screen 10. This basic method for translating texts can be extended to the method described in figure 14. To extend this method to a software localizing method, the storage unit 6 may have been previously fed with different keyword translations from a software localization, and can be used to translate e.g. manuals and the like.

Figure 13b shows a block diagram illustrating an embodiment of an apparatus for translating elements of a source language text.

Further, the apparatus 600 comprises a component for searching 602 untranslated elements of the software related text 610. The component for searching 602 may be constituted by a data processing device or a program section executed at a processing device. Moreover, the component for searching 602 may realized by a code section containing instructions for extracting. Untranslated elements of the source language text may be searched according to operation 2 shown in figure 13a.

Further, the apparatus 600 comprises a component for retrieving 604 translation elements for each untranslated text element. The component for retrieving 604 may be constituted by a data processing device or a program section executed at a processing device. Moreover, the component for retrieving 604 may realized by a code section containing instructions for extracting. Translation elements for each untranslated text element may be retrieved from a database 6 according to operation 4 shown in figure 13a.

Further, the apparatus 600 comprises a component for associating 606 the untranslated elements of the source code with the retrieved translation elements. The component for associating 606 may be constituted by a data processing device or a program section executed at a processing device. Moreover, the component for associating 606 may be realized by a code section containing instructions for extracting. The searched untranslated elements of the source language may be associated with the retrieved translation elements according to operation 8 shown in figure 13a.

Figure 14 is a flowchart according to another embodiment. The start box 10 of the flowchart presumes the presence of a source language text, a database with stored source language text elements and related translated target text elements, and that the source and the target language are already entered. At a operation 12 the system program or a user selects the type of text element which the present source language text has to be split into. The text element can be any language or text unit, like text sections, sentences, words and the like. After the splitting of the source text into text elements, the text elements are entered in fields of a translation table (see figure 16). Then an untranslated source text element is searched in operation 14, followed by checking the database for a matching source text elements in operation 16. If such a matching text element can't be found, the text element stays untranslated and a respective field in the pretranslation table stays empty or was marked with an "untranslatable " mark in operation 24, and the system searches for the next untranslated source text element in operation 22.

If a matching text element can be found in the database, the system copies the related translation to a pretranslation field in the translation table in operation 18. The text elements stored in the database can be exact matches or fuzzy matches. An exact match means that the source text element and the database text element are identical. A fuzzy match means that the source text element and the database text element only differ in one or a few words or punctuation marks. Fuzzy matches can be marked with an index indicating the fuzziness of the match, i.e. the quality of the match. In both cases the related translations where copied to a pre translation table. In the case of fuzzy matches or in the case of more than one exact match, the pretranslation table entries may be sorted e.g. for their matching quality, to prevent that a user wastes time searching for the best match. More than one translation of a single entry can be possible as translations of single words can be equivocal, and so the translation of whole sentences are equivocal, too. In the next operation 22, the method searches for the next untranslated source text element. If a next text element can be found, the method returns to operation 16, to loop operations 16 to 22, until a next text element can not be found.

If the system cannot find a next source text element, the method requests if the actual text element is the smallest text element available in operation 26. If the actual text element is not the smallest available, the method selects a smaller text element in operation 27 and the method returns to operation 14, to loop operations 16 to 24, until no next smaller text element could be found. If no smaller text element can be found the translation is terminated in operation 28.

Figure 15 depicts a flowchart of a dictionary database updating method according to another embodiment. The flowchart represents an detailed execution example of the arrow between the element 116 and the database 150 in figure 12. As this figure is related to figure 12, the element 116 is depicted as used in figure 12. In figure 12 the element is located between the operations 110, 130 and the operations 112, 132. These connections are indicated with the two arrows and the respective reference numerals. The validating operation 116 leads to a new validated pair of a text element and a respective translation element. To increase the translation database 150, the two elements are provided with a preliminary key identification number (key ID), in operation 200. The pair of elements is transferred to said database 150 in operation 202. The database analyzes both elements to generate a new key ID, in operation 204. Finally, the text element and the translation element are stored, in operation 206. With a new entry stored in database 150, the translation database is growing and enables the database to increase the grade of matching of retrieved translation elements.

It should be noted that the preliminary key ID may be cancelled or economized, if the database itself can generate a key ID. It should further be noted, that the operations of updating the database may only comprise the updating of, e.g. statistical information. The database may only be informed about the number indicating how often a known translation element has been used to translate a certain text element. The statistical information may increase the efficiency to provide e.g. a translation program with an improved standard database.

Figure 16 depicts a section of a translation table for the use in the above mentioned embodiment for a translation method. The first tree columns of the depicted translation table represent the minimum required information for a translation table. The depicted table contains four columns: In the first column the table contains a key identification (ID), to identify the entry in the translation table. The key ID can be a single key, or a main ID with attached sub-IDs. The second column contains language IDs. The language IDs has information about the used language, and can be represented e.g. as in the present table by the characterizing numbers of the telephone area code. The language ID can be a single key, or a main ID with attached sub-IDs, indicating, e.g. dialects. The third column of the table contains text elements (words) in the different languages. One problem with translations is that synonyms lead to equivocal translations. To simplify the work of the user the table may contain a fourth column, providing additional information about how to use the present word. The fourth column can contain e.g. synonyms or background information of the table entry in the third column.

It may be noted that the different keyword may comprise different columns with different ID numbers (not shown). Different columns can e.g. contain the sorting index in the language of the word, for sorting the text element entries according to different sorting rules, like alphabetic, number of characters, grammar information and the like. To simplify this, additional columns can contain information related e.g. to the actual software number, to enable the users of the system to distinguish if a translation is validated for the present software localization or has been validated for another software localization. The table may further comprise different columns to relate the present entry to different other languages, so that only one table with n-1 additional columns is needed for each language, to provide translations between all n languages. Instead of $n \cdot (n\text{-}1)$ tables to connect each language with every other, another possible table structure with single tables for each language and a central (e.g. n-dimensional) relation matrix (or tensor) would enable the method to use transitive translations. So if a text element never has been translated from a first language to a third language, the system may detect that the text element has been already validated in a translation to a second language, and has been validated in a translation from said second language to said third language, the system may be able to derive a translation proposal via said second language. The described embodiments may also utilize a object oriented database structure for the dictionary database.

It should further be noted that the translation table can further comprise information about the origin of the text or the translation, if the software localization system supports translation specific keyword databases.

Figure 17a depicts three user interaction interfaces ("screenshots") according to another embodiment . Figure 17a shows an example of how the described embodiments may be embodied on a computer device. The first screenshot 40 shows a computer program or device depicting all found matches down to a matching of 84%. The screenshot 40 comprises four columns. The first column represents a key ID of the text element (sentence) in the text. The second column represents the language ID of the text element entry. The third column represents the database text elements entries. To simplify the decision which of the pretranslation table entries matching the source text element most, are shown in the source language, and therefore all entries in the language column are all "1". The fourth column can represent two kinds of information. In the case of a source text element the fourth column represents a status. The status of the source text element in the first line and third column of screenshot 40 is "untranslated". In the case of pretranslation entries (line 2 to 5) the fourth column represents a "Quality" value, indicating how exact the source language entry (line 2 to 5) in the pretranslation table matches the source text element (in line 1). The depicted percentage values may be determined e.g.

according to the formula: $x = \dfrac{b_{common}}{a_{ste}} \cdot 100$ , wherein $a_{ste}$ represents the number of characters of the source text element and $b_{common}$ represents the number characters common and common in sequence to the source text element and the source language database entry.

To simplify the use of the method the differing characters are depicted bold, italic and are surrounded with a box. Other markings of the differences can be applied equally. In screenshot 40 the field in the third column, second line is surrounded by a bold line to indicate that this translation suggestion is marked. With a user input the user may select the surrounded translation suggestion, e.g. by a "mouseclick" an "enter" or a contact with a touch screen.

With the selection the displayed table changes to screenshot 42: all unselected translations suggestions are deleted from the screen, and the third line of the table contains the translation of the database entry. Therefore, line 3 column 1 contain the same key ID as the other two lines, and line 3 column 2 contain the language ID of the target language. Line 3 column 3 contain the translation of the source language database entry, and the column 4 indicate an exact match of the source text element and the source language database entry. The translation suggestion is marked with a bold frame to indicate that the translation suggestion is selected.

With a second user input the depicted table changes to table 44. Only containing one line: In the first field, the key ID of the source text element, in the second field the language ID, in the third field the translated text element, and finally in the fourth field the status indicating "fully translated".

This is only given by way of a non limiting example. So the first two columns of the tables 40, 42, 44 may be economized. The makings may be different. The above described method may even skip the screenshot 42, if the quality of the selected suggestion is 100%.

Figure 17b illustrates schematically a flow diagram according to the user interaction shown in figure 17a. The untranslated text may be the same as shown in figure 17a and references to figure 17a will be made in order to complete the flow diagram of figure 17b. Figure 17b illustrates the operations of the user iterative interface with respect to the example presented in figure 17a.

In an operation S1, an untranslated text may be processed. The text may be "The computer is standing on the table". The untranslated text may be further a text according to language "1".

In an operation S3, the database may be accessed for retrieving translation elements for the untranslated text of the same language, herein all related translation element of the language "1". The retrieving may involve a matching operating wherein the matching operation may result in exact matches or in fuzzy matches.

In an operation S5, the retrieved related elements may be received by the computer executing the user interaction interface. The matching quality value according to the formula $x = \dfrac{b_{common}}{a_{ste}} \cdot 100$ is determined of the received related translation elements.

In an operation S6, the untranslated text, the translation related elements is sequenced in a list by the user interaction interface according to the list 40 depicted in figure 17a. All retrieved entries are listed according to their matching quality.

In an operation S7, the user may select an entry of the presented list 40 shown in figure 17a. Since the second list entry may have assigned a quality of 100%, the untranslated text and the translating related element match exactly. Due to the matching quality the user may select the second entry of the list, indicated by the bold surrounding lines according to the depicted list 40 in figure 17a.

In an operation S9, the translation of the translation related element selected in operation S7 may be retrieved from the database. For retrieving the respective key-ID of the selected translation related element may be used. The retrieved translation may be a translation of the selected translation related element into the language "49".

In an operation S11, The translation of language "49" of the selected translation related element may be received by the user interactive interface from the database. A list may be prepared presenting the untranslated text, the selected translation related element and the translation to the user desired language, herein a translation from the language "1" which is the language of the untranslated text to the language "49". The matching quality have been determined in operation S5 so that a new determination may be skipped. The matching quality value of the translation related element may be assigned to the corresponding retrieved translation since the determination of the above defined matching quality may be determined only in combination with text of the same language.

In an operation S12, the respective list comprising the key-ID, the language code, the corresponding element and the status or quality, respectively, may be presented in a list illustrated as list 42 in figure 17a.

In an operation S13, the user confirms the translation of the untranslated text by selecting the translation. The selection may be indicated by bold surrounding lines which is shown in list 42 in figure 17a.

Due to the fact that the matching quality of the untranslated text and the translation related element retrieved from the database shows a value of 100% the translation is an exact translation. The respective entry is available in the database such that no additional entry may have to be added to the translation database.

In an operation S14, the translation of the untranslated text has been done successfully and is finished. The user interactive interface may present the next untranslated text for translating the user and may start again with operation S1.

The shown example is related to a 100% matching translation. That means, that the exact translation of the untranslated text was found in the database. Therefore, no further database entries may have to be included in the database. The following figure 18a and figure 18b present an example of a non-exactly matching untranslated text involving the generation of a new database entry.

Figure 18a depicts another set of user interaction interfaces ("screenshots") according to another embodiment. Figure 18a shows an example of how the described embodiments may be embodied on a computer device. The first screenshot 50 shows a screenshot of a computer program or device depicting all found matches in a matching range of 66% down to 61%. The screenshot 50 comprises four columns. As in figure 17a, the first column represents a key ID of the text element (sentence) in the text. The second column represents the language of the text element entry. The third column represents the source text element and database text elements entries. To simplify the decision which of the pretranslation table entries are matching the source text element most, the pre-translation entries are shown in the source language, and therefore all entries in the language column are "1". Similar to figure 17a, the fourth column can represent two kinds of information. In the case of a source text element the fourth column represents a status. The status of the source text element in the screenshot 50 is "untranslated". In the case of pretranslation entries (line 2 to 3) the fourth column represents a "Quality" value, indicating how exact the source language entry in the pretranslation table matches the source text element.

The depicted percentage values are determined according to the same formula as in figure 17a. The formula used in figure 17a may be modified by replacing $a_{ste}$ by $a_{dte}$ representing the number of characters of the database text element. It should be noted that the formula is not limited to the use of characters, but can be applied e.g. to words, sentences and the like too. The formula may also comprise other terms using grammar structure related values to characterize the matching. In difference to figure 17a the retrieved translation suggestions reaches a maximum match of only 66%. The closest source text entry in the table is marked with a bold frame.

With a selection of the bold frame by user input, the system depicts the screenshot 52. The screenshot 52 depicts in the first line the source text element, in the second line the retrieved database text entry and in the third line the translation of the database entry. As the system can detect the and mark the differences between the source text element and the database entry, the system can be able to mark the differences in the translation of the database entry. All marked elements are depicted bold, italic, and with a small frame in the figure.

Next the user may edit the translation entry pretranslation table in an additional operation, e.g. by keyboard input or the like. Advanced systems may even utilize voice recognition algorithms. In the present pretranslation table the user accepted the proposed translation by a user input.

By accepting the proposed translation matching only 66% with the source text element, the system only translates the matching part of the source text element. The screenshot 54 represents a partially translated element in the pretranslation table. The table 54 may further depict the source text element and the retrieved database entry translation. In the first column the table depicts the key ID "1" of the source text element. In the second column the table depicts no entry, as a partially translated sentence can hardly be related to a single language. The entry in the second column can be "1", or "1-49" as part of the text element still is untranslated. In the third column the partially translated text is depicted, with a bold, italic underlined untranslated part depicted in capitals. The untranslated sentence is surrounded by a dotted bold frame to indicate that the present state of the sentence requires additional processing.

To reach the next operation, the user may select another text element size to post-process the entry in the preprocessing table, or the user may first translate all other text elements and proceed then with a smaller text element.

The next screenshot 56 depicts a second translation stage with smaller text elements. In this stage the text elements are words and/or word/article combinations. The present table depicts in the first column a newly generated key ID 127, to distinguish the different stages of the translation algorithm. In the second column first line, the language ID has not be changed, as the sentence is still only partially translated, while in the second line the retrieved database entry is marked with a "1" and in the third line the translation suggestion is marked as the target language with a "49". In the third column the untranslated part is of the sentence is marked as in table 54, its related database entry and its translation suggestion retrieved from a translation database.

With a user input accepting the proposed translation, the depicted table changes to table 58, containing only one line: In the first field, the key ID of the source text element (in this case the sentence), in the second field the language ID "49", in the third field the translated text element, and finally in the fourth field the status indicating "fully translated".

With the operation of accepting the suggested translation proposal, the system generates a new database entry 60 containing the source text element and the accepted translation. To retrieve the pair simple and fast, the entries comprise key IDs, language IDs. The new database entry is not necessarily depicted, as the storage operation can be executed automatically.

It should be noted that the translation database may comprise different 100% matching database entries, due to different equivocal translations.

Figure 18b illustrates schematically a flow diagram according to the user interaction shown in figure 18a. The untranslated text may be the same as shown in figure 18a and references to figure 18a will be made in order to complete the flow diagram of figure 18b. Figure 18b illustrates the operations of the user iterative interface with respect to the example presented in figure 18a.

In an operation S20, an untranslated text may be processed. The text may be "The computer is standing on the table". The untranslated text may be further a text according to language "1".

In an operation S22, the database may be accessed for retrieving translation elements for the untranslated text of the same language, herein all related translation element of the language "1". The retrieving may involve a/matching operating wherein the matching operation may result in exact matches or in fuzzy matches.

In an operation S24, the retrieved related elements may be received by the computer executing the user interaction interface. The matching quality value according to the formula $x = \dfrac{b_{common}}{a_{dte}} \cdot 100$ is determined of the received related translation elements.

In an operation S25, the untranslated text, the translation related elements is sequenced in a list by the user interaction interface according to the list 50 depicted in figure 18a. All retrieved entries are listed according to their matching quality. The list may present the key-ID, the language the untranslated text or the translation related elements, respectively, and the matching quality. The non-fitting text parts of the translation related elements in relation to the untranslated text may be indicated by italic characters.

In an operation S26, the user may select an entry of the presented list 50 shown in figure 18a. In this example no entry of the list shows a matching quality of 100% indicating that no exact match was retrieved from the database. The second entry of list 50 shown in figure 18a may have a matching quality value of 66%. The user may select the best matching entry, herein the second list entry which may be indicated by bold surrounding lines.

In an operation S28, the translation of the translation related element selected in operation S26 may be retrieved from the database. For retrieving the respective key-ID of the selected translation related element may be use. The retrieved translation may be a translation of the selected translation related element to the language "49".

In an operation S30, the translation of language "49" of the selected translation related element may be received by the user interactive interface from the database. A list may be prepared presenting the untranslated text, the selected translation related element and the translation to the user desired language, herein a translation from the language "1" which is the language of the untranslated text to the language "49". The matching quality have been determined in operation S24 so that a new determination may be skipped. The matching quality value of the translation related element may be assigned to the corresponding retrieved translation since the determination of the above defined matching quality may be determined only in combination with text of the same language.

In an operation S31, the respective list comprising the key-ID, the language code, the corresponding element and the status or quality, respectively, may be presented in a list illustrated as list 52 in figure 18a. The non-fitting text parts of the translation related elements in relation to the untranslated text may be indicated by italic characters.

In an operation S32, the user confirms the translation of the untranslated text by selecting the translation. The selection may be indicated by bold surrounding lines which is shown in list 52 in figure 18a.

In an operation S33, due to the fact that no exact matching translation related element was found in the database a mixed language translation result may be presented to the user by the user interactive interface. This can be seen in list 54 shown in figure 18b. The text "The computer" may have not been translated. But the remaining part of the sentence may have been translated by the above performed operations.

In an operation S34, the user may select the untranslated text part for further translation. This can be seen in list 54 shown in figure 18a.

The translation may be further continued by trying to translate a not translated text part, defining this part as a untranslated text and performing translation operations according to the operation described above. The untranslated text "The computer" of the language "1" may be operated in the following steps.

In an operation S35, a translation related element according to the untranslated text part may be retrieved from the database. The retrieving may involve a matching operating wherein the matching operation may result in exact matches or in fuzzy matches. The translation related elements of the language "1" according to the untranslated text part are searched.

The retrieving of translation related elements with respect to the untranslated text part may only return a single matching translation related element. In this case, the respective translation (language "49") may be also automatically retrieved from the database since no further translation related elements may be presented to the user for selecting.

In an operation S37, due to the retrieving of the translation related element and the translation into the language "49°" thereof a list of the partially translated text, the translation related element according to the untranslated text part and the translation may be prepared. The matching quality value may be determined. The determining of the quality may be derived in respect to the untranslated text part and the retrieved translation related element. The translation may have assigned the same matching quality value.

To indicate the new translation operation with respect to the untranslated text part, a new key-ID may be assigned to the list entries. According to list 56 shown in figure 18b, the key-ID may be "127".

In an operation S38, the list of the partially untranslated text, the retrieved translation related element and the translation (language "49") may be shown to the user. The respective list can be seen in list 56 shown in figure 18a. The partially translated text may have assigned no language ID. A status information of the partially translated text may indicate a percentage value according to the translated text part.

In an operation S39, the user may select the second list entry of the list 56 shown in figure 18b. The selection may be indicated by bold surrounding lines.

In an operation S40, the combination of the two independent translation operations of the untranslated text of operation S20 may lead to the complete translation thereof. The complete translation may be presented by the user interactive interface to the user. The key-ID of the translation may show the former key-ID value of operation S31. The status information indicates the successful translation. The respective list 58 is shown in figure 18a.

In an operation S42, since the untranslated text was not found in the database a new database entry may be generated. The contents of the new database entry is shown in list 60 of figure 18b. The key-ID may be given by an available key-ID of the database and may be generated automatically as a result of the generation of the database entry. The user interactive interface may present the next untranslated text for translating the user and may start again with operation S20.

A new entry may have been generated for the untranslated text presented in operation S20. Further occurrence of this untranslated text may lead to the retrieving of a translation related element of a matching quality value of 100%. The operations of the user interactive interface in case of exact matches are above described in detail in figure 17a and figure 17b.

The continuous adding of new database entries according to the presented embodiment may ensure that untranslated text is translated in the same manner to the respective translation language preventing the usage of synonyms or synonym text constructions which may irritate and confuse a reader of the translated text.

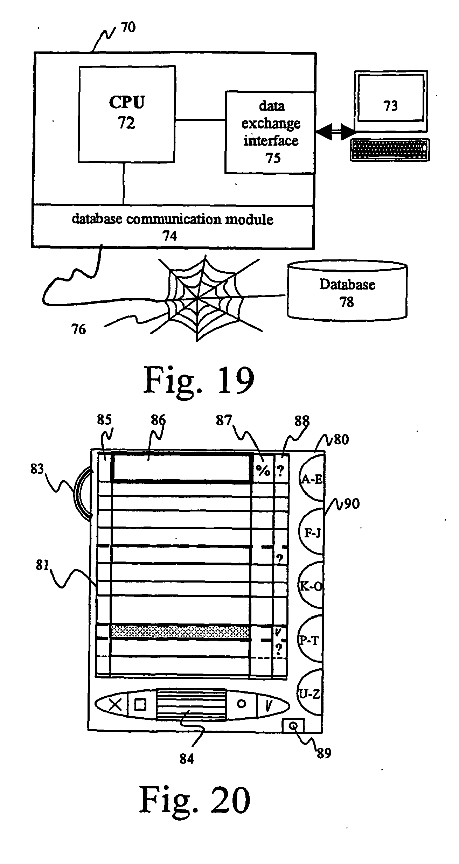

Figure 19 depicts an apparatus for translating texts according to another embodiment by means of a database and a database management system, comprising

- a module 74 to communicate with a database 78,
- a module 75 for exchanging data,
- processing device 72 for retrieving elements from a database.

There is also depicted a realization of the apparatus 70 according to one embodiment. The apparatus 70 is connected via a communication module 74 to a network 76. Via the network 76 the apparatus 70 can communicate with other devices (not shown) e.g. to exchange data. The network 76 can be the internet, or any other wide area, or local area network. The communication module 74 is connected to a Central Processing Unit (CPU) 72, to execute the exchange and filtering of data. The CPU 72 is connected to a data exchange interface 75, e.g. a user interaction interface. The data exchange interface 75 can be connected to a keyboard and a display, or via a network to a terminal device to interact with a user. The database 78 contains the translation data to be accessed, via said communication module 74 and said network 76. To be able to translate texts in a correct way, the CPU 72 must be able to receive the source texts and to relate said source texts with the data stored in the database 78. The source texts may be received via the data exchange interface 75, or via the communication module 74 from the network 76. To simplify the reception of the source texts, the user interaction device 73, the database 78 may be incorporated in a single and maybe portable device (see figure 20).

Figure 20 depicts a sentence based electronic translation apparatus according to another embodiment. The translation apparatus is embodied as an interactive electronic dictionary 80. The electronic dictionary can be an electronic book comprising a display 81 for depicting a pretranslation table containing, a source text, translation proposals, a translated text and translation related information. In the translation table the first column 85 represents a key ID, to identify every text element in the source text. The second column 86 contains source text elements and translation proposals. Third column 87 contains matching indices to indicate how similar the source text entry is to the source text element. The fourth column 88 contains status symbols to indicate if the source text element requires further processing or translating. The user can interact with the dictionary by a scroll wheel 83, keys, a scroll roll 84 and thumb index menu keys 90. A user can e.g. pre-select a character or source text element with the thumb index 90, scroll the alphabet or the source text elements with the scroll wheel 83, and select translation proposals with the keys and the scroll roll 84. The electronic dictionary can further contain an interface 89 to communicate with e.g. a network to update its database or exchange data with another database. The dictionary may further upload new source texts via the interface 89, or print translated texts on a printer connected to the interface. The electronic dictionary (ED) may further comprise a built in scanner to recognize source texts autonomously. The dictionary may further comprise an extension slot, to connect the ED with handheld scanners, mobile communication devices, wireless networks and the like. So the ED may be used as a translation device for custom officers, to translate foreign bills of loading. The ED 80 may also be used as a conventional electronic book. An electronic book application has the advantage that users may read a book in its original language, with the option to translate single sentences.

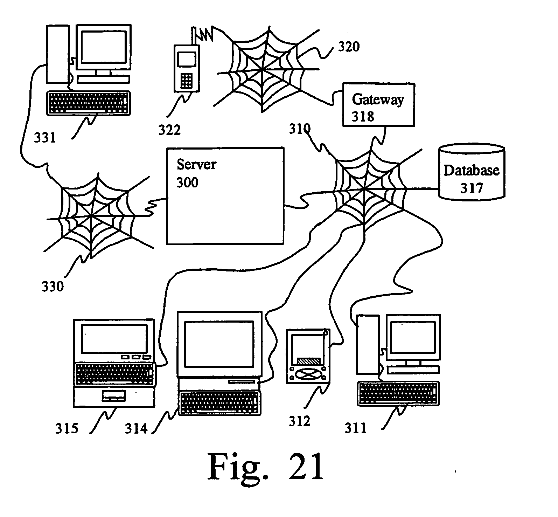

Figure 21 depicts a network system with an apparatus as described in figure 19 or 20 and at least one database 317. The apparatus can be a server 300 or client devices 311-316, 322, 331. The database can be the database 317, or any other database integrated in one of the client devices 311-316, 322, 331 or the server 300. The client devices are connected via networks 310, 330, 320 to the server 300. It is assumed that the server 300 contains an internal database (not shown) or can at least access an external database 317 or a database in one of the client devices 311-317, 322, 331. In the figure the server is directly connected to two networks, a local area network (LAN) 330 and a wide area network (WAN) 310. In the LAN 330 only one client is depicted, the personal computer 331. The WAN 310 is connected to a personal computer 311, a personal digital assistant (PDA) 312, a browser 314, laptop 315, a database 317 and a gateway 318 to a communication network 320. The gateway 318 indirectly connects a communication device 322, e.g. a mobile telephone with computation abilities with the server 300. So all the client devices 311-317, 322, 331 are connected to the server 300.

All client devices may comprise user interfaces, CPUs and memories or even databases. To execute the method according to the described embodiments the client devices 311-317, 322, 331 and/or the sever 300 are enabled to access a translation database. Thereby, the exact location of the translation database is not important. So the database 317 may comprise the translation database and offer the client devices 311-317, 322, 331 to access the stored translation elements. Or each client device 311-317, 322, 331 comprises its own translation database enabling them to translate text elements received from an internal or remote device. The method according to the described embodiments is executable as long as a translation database is accessible, e.g. via the networks 310, 320, 330. In the simplest case the client devices 311-317, 322, 331 themselves contain a translation database. In the simplest case the client devices are autonomous software localizing devices being connected to the network only to access new software to be localized. A very complex case would be to access a database 317 via a server 300 which is accessing distinct databases to retrieve text elements to be translated.

As the data of the database are usually retrieved by a database management system (DBMS) the data source may be able to use relational algorithms between tables. The DBMS can store the text elements e.g. in a directory table, and the translation elements in a related user specific translation table. So the data source of the DBMS may utilize relational algebra to interconnect said text elements with said translation elements. The DBMS user interface enables the user to translate text elements by accessing pre-translation tables. The translation elements can be selected and/or validated in each field of the pre-translation table by a user input. The user input can be a keyboard input, a mouse input and the like. In a last operation the validated text elements and validated translation elements are stored in the database, to be automatically retrieved if the user accesses the database with a DBMS to retrieve said text element next time.

According to another embodiment, an apparatus for localizing software by adapting the language of text contained in a source code of said software and an apparatus for localizing software related text by adapting the language of the text has following structural elements:

1) Apparatus for localizing software by adapting the language of text contained in a source code of said software, comprising:

- a code section containing instructions for extracting text elements from said source code,
- a code section containing instructions for searching untranslated elements of said extracted text elements,
- a code section containing instructions for retrieving translation elements for each untranslated test element and
- a code section containing instructions for associating said untranslated elements of said source code with said retrieved translation elements.

2) Apparatus according to 1) further comprising:

- a code section containing instructions for validating said retrieved translation elements and
- a code section containing instructions for merging said source code with said validated translation elements.

3) Apparatus according to 1) or 2), further comprising:

- a code section containing instructions for compiling said merged source code.

4) Apparatus according to any one of 1) to 3), for adapting the language of text related to said software, further comprising:

- a code section containing instructions for searching untranslated elements of said software related text,
- a code section containing instructions for retrieving translation elements for each untranslated text element on the basis of the association of said retrieved source code translation elements and
- a code section containing instructions for associating said untranslated elements of the software related text with said retrieved translation elements.

5) Apparatus for localizing software related text by adapting the language of the text, comprising:

- a code section containing instructions for searching untranslated elements of said software related text,
- a code section containing instructions for retrieving translation elements for each untranslated text element and,
- a code section containing instructions for associating said untranslated elements of said text with said retrieved translation elements.

6) Apparatus according to any one of 1) to 5), wherein said code section containing instructions for associating is executed by a code section containing instructions for entering said retrieved translation elements into a table.

7) Apparatus according to any one of 1) to 6), wherein the code section containing instructions for retrieving translation elements comprises a code section containing instructions for comparing each untranslated text element with entries of a dictionary database.

8) Apparatus according to any one of 1) to 7), wherein said retrieved translation element is entered at the location of said untranslated text element or in proximity of said untranslated text element.

9) Apparatus according to any one of 1) to 8), further comprising:

- a code section containing instructions for displaying matching translation elements to a user and
- a code section containing instructions for accepting a user input indicating a validation of a specific matching translation element.

10) Apparatus according to any one of 1) to 9), further comprising a code section containing instructions for editing said received translation element, by user input, prior to said validation.

11) Apparatus according to any one of 7) to 10), wherein said code section containing instructions for entering operation comprises a code section containing instructions for updating said dictionary database with said validated translation element.

12) Apparatus according to any one of 7) to 11), wherein the code section containing instructions for retrieving comprises:

- a code section containing instructions for searching matching translation elements in said dictionary database and
- a code section containing instructions for generating an index, indicating the percentage of matching.

13) Apparatus according to 12), wherein said table is a pre-translation table and the number of entries in said pre-translation table at the location of an untranslated text element is related to said index which is provided for an untranslated element.

14) Apparatus according to 12) or 13), further comprising:

- accepting said translation element of said text element entry as a valid translation entry automatically, if said index indicates an exact match of said untranslated text element with said text element entry.

15) Apparatus according to any one of 1) to 14), further comprising a code section containing instructions for marking text elements as translated or untranslated or partially translated elements.

16) Apparatus according to any one of 1) to 15), wherein said text elements are words, sentences and/or texts.

17) Apparatus according to any one of 1) to 16), further comprising the a code section containing instructions for processing of text elements and translated text elements stored in said database to extract translation related information.

18) Apparatus according to any one of 1) to 17), further comprising a code section containing instructions for sorting said text elements.
According to another embodiment, a method for localizing software may have the following elements.

19) A method for localizing software by adapting the language of text contained in a source code of said software, comprises the operations of:

- extracting text elements from said source code;
- searching untranslated elements of said extracted text elements;
- retrieving translation elements for each untranslated text element;
- associating said untranslated elements of the source code with said retrieved translation elements;

20) Method according to 19) further comprising the operations of

- validating said retrieved translation elements;
- merging said source code with said validated translation elements.

21) Method according to 19) or 20), further comprising the operation of:

- compiling said merged source code.

22) Method according to any one of 19) to 21), for adapting the language of text related to said software, further comprising the operations of:

- searching untranslated elements of said software related text,
- retrieving translation elements for each untranslated text element on the basis of the association of said retrieved source code translation elements,
- associating said untranslated elements of the software related text with said retrieved translation elements.

According to another embodiment, a method for localizing software may have the following elements.

23) Method for localizing software related text by adapting the language of the text, comprising the operations of:

- searching untranslated elements of said software related text,
- retrieving translation elements for each untranslated text element,
- associating said untranslated elements of said software related text with said retrieved translation elements.

24) Method according to any one of 19) to 23), wherein said associating is executed by entering said retrieved translation elements into a table.

25) Method according to any one of 19) to 24), wherein the operation of retrieving translation elements comprises the operation of comparing each untranslated text element with entries of a dictionary database.

26) Method according to any one of 19) to 25), wherein said retrieved translation element is entered at the location of said untranslated text element or in proximity of said untranslated text element.

27) Method according to any one of 19) to 26), further comprising:

- displaying matching translation elements to a user,
- waiting for user input indicating a validation of a specific matching translation element.

28) Method according to any one of 19) to 27), further comprising an operation of editing said received translation element, by user input, prior to said validation.

29) Method according to any one of 7) to 28), wherein said entering operation comprises updating said dictionary database with said validated translation element.

30) Method according to any one of 7) to 29), wherein said retrieving operation comprises the operation of searching matching translation elements in said dictionary database and further comprises the operation of:

- generating an index, indicating the percentage of matching.

31) Method according to 12), wherein said table is a pre-translation table and the number of entries in said pre-translation table at the location of an untranslated text element is related to said index which is provided for an untranslated element.

32) Method according to 12) or 31), further comprising the operation of:

- accepting said translation element of said text element entry as a valid translation entry automatically, if said index indicates an exact match of said untranslated text element with said text element entry.

33) Method according to any one of 19) to 32) further comprising the operation of marking text elements as translated or untranslated or partially translated elements.

34) Method according to any one of 19) to 33), wherein said text elements are words, sentences and/or texts.

35) Method according to any one of 19) to 34), further comprising the processing of text elements and translated text elements stored in said database to extract translation related information.

36) Method according to any one of 19) to 35), further comprising the operation of sorting said text elements.

According to another embodiment, a software tool for enabling and supporting a user to localize software or software related texts by translating texts by means of a database may be provided, comprising program code portions for carrying out the operations of any one of 19) to 35) when said program is implemented in a computer program.

According to another embodiment, a computer program for enabling and supporting a user to localize software or software related texts by translating texts by means of a database may be provided, comprising program code section for carrying out the operations of any one of 19) to 35) when said program is run on a computer or a network device.

According to another embodiment, a computer program product for enabling and supporting a user to localize software or software related text by translating text elements by means of a database may be provided, wherein said computer program product is comprising program code sections stored on a computer readable medium for carrying out the method of any one of 19) to 35) when said program product is run on a computer or network device.

According to another embodiment, an apparatus for localizing software by adapting the language of text contained in a source code of said software may be provided, comprising:

- a component for extracting text elements from said source code;

- a component for searching untranslated elements of said extracted text elements;
- a component for retrieving translation elements for each untranslated test element;
- a component for associating said untranslated elements of said source code with said retrieved translation elements.

According to another embodiment, an apparatus for localizing software related text by adapting the language of the text may be provided, comprising:

- a component for searching untranslated elements of said software related text ;
- a component for retrieving translation elements for each untranslated text element;
- a component for associating said untranslated elements of said text with said retrieved translation elements.

According to another embodiment, an apparatus for enabling and supporting a user to localize software and/or software related texts by translating text by means of a database may be provided,

37) Apparatus for enabling and supporting a user to localize software and/or software related texts by translating text by means of a database may be provided, comprising

- a module to communicate with a database,
- an interface for exchanging data,
- a processing device for retrieving elements from a database, connected to said communication module and to said data exchange interface.

38) Apparatus according to 37), further comprising

- a dictionary database connected to said communication module.

According to another embodiment, a network system for enabling and/or supporting at least one user to localize software or software related text by translating text by mans of a database may be provided, comprising

- at least one apparatus according to one of 37) and 38);
- at least one translation database for exchanging data with said at least one apparatus.

**Claims**

1. Method for providing localized versions of a software application with text elements, comprising:

   accessing (201) a code of the software application associated with a plurality of text elements in a first language;
   obtaining (202) translations of the text elements in a second language;
   associating (203) the text elements in the second language with the code;
   effecting provision of localized versions of the software application including the operations of:

   obtaining (701) a functional code element of the software application including a property key for each text element at respectively specified locations, the functional code element constituting code excluding text elements;
   generating (702) a first localized property code element comprising the text elements in the first language and the property keys in association with the text elements;
   generating (702) a second localized property code element comprising the text elements in the second language and the property keys in association with the text elements;
   linking (703) the functional code element with the first localized property code element using a first language identifier to provide a first localized version of the software application for the first language; and
   linking (704) the functional code element with the second localized property code element using a second language identifier to provide a second localized version of the software application for the second language.

2. Method of claim 1, wherein the text elements are provided at specified positions within a code file including the code and wherein the translated text elements in the second language are merged into the code file at the positions of the corresponding text elements in the first language.

3. Method of at least claim 1, including collecting the text elements in the first language and storing them in a text element file; and merging the translated text elements in the second language into the text element file.

4. Method of at least one of the preceding claims, wherein each text element in the first language is linked to a location in the code with one of a plurality of property keys.

5. Method of claim 4, including associating the translated text elements in the second language with the property keys of the corresponding text elements in the first language.

6. Method of at least one of the preceding claims, wherein the text elements in the first language are associated with a first language identifier and the text elements in the second language are associated with a second language identifier.

7. Method of at least one of the claims 3 to 6, wherein the text element file includes context information comprising at least one of language identifiers and property keys.

8. Method of at least one of the preceding claims, wherein the linking operation is performed during runtime execution of the software application.

9. Method of at least one of the preceding claims, wherein the property code elements are constituted by JAVA properties and the property keys are constituted by JAVA property keys.

10. Method of at least one of the preceding claims, wherein providing the localized version of the software application for the first language involves starting a mapping process for producing the localized version of the software application, the mapping process receiving the first language identifier as an input.

11. Method of claim 10, wherein the mapping process involves one of a compilation and an interpretation of the code.

12. Method of at least one of the preceding claims, including generating an input file including at least one of:

    - language identifiers;
    - file names of the localized version of the software application;
    - text elements in the first and second language; and
    - property keys associated with the text elements.

13. Method of at least one of the claims 3 to 12, wherein obtaining translation text elements includes extracting relevant information from the text element file and importing the information into a database; and the translated text elements are merged back into the text element file.

14. Method of at least one of the preceding claims, wherein obtaining the translated text elements includes using a web-based tool.

15. Method of at least one of the claims 3 to 12, wherein the text element file is constituted by an XML file and wherein generating the translated text elements includes an XML editor.

16. Method of at least one of the preceding claims, wherein the text elements include at least one of:

    - menu items of a display screen;
    - text elements of a display screen;
    - a runtime message for a user;
    - help information;
    - installation information on the application program;
    - language dependent symbols;
    - language dependent formatting information;
    - language dependent layout information; and
    - language dependent code sections of the code.

17. A program having instructions adapted to cause data processing means to carry out all steps of the method of at least one of the claims 1 - 16.

18. A computer readable medium, in which the program according to claim 17 is embodied.

19. A computer program product comprising the computer readable medium according to claim 18.

20. Data processing unit for providing localized versions of a software application with text elements, comprising:

    communication means (102) for accessing a code of the software application associated with a plurality of text elements in a first language and obtaining translations of the text elements in a second language; and
    a processing element (101) for effecting provision of localized versions (141, 142) of the software application, the processing element being adapted to:

    obtain a functional code element of the software application including a property key for each text element at respectively specified locations, the functional code element constituting code excluding text elements;
    generate a first localized property code element comprising the text elements in the first language and the property keys in association with the text elements;
    generate a second localized property code element comprising the text elements in the second language and the property keys in association with the text elements;
link the functional code element with the first localized property code element using a first language identifier for effecting provision of a first localized version of the software application for the first language; and
link the functional code element with the second localized property code element using a second language identifier for effecting provision of a second localized version of the software application for the second language.

21. Data processing unit of claim 20, wherein the text elements are provided at specified positions within a code file including the code and wherein the processing element is adapted to merge the translated text elements in the second language into the code file at the positions of the corresponding text elements in the first language.

22. Data processing unit of claim 20, wherein the processing element is adapted to collect the text elements in the first language and to store them in a text element file; and wherein the processing element is further adapted to merge the translated text elements in the second language into the text element file.

23. Data processing unit of at least one of the claims 20 to 22, wherein the processing element is adapted to link each text element in the first language to a location in the code with one of a plurality of property keys.

24. Data processing unit of claim 23, wherein the processing element is adapted to link the translated text elements in the second language with the property keys of the corresponding text elements in the first language.

25. Data processing unit of at least one of the claims 20 to 24, wherein the processing element is adapted to associate the text elements in the first language with a first language identifier and the text elements in the second language with a second language identifier.

26. Data processing unit of at least one of the claims 22 to 25, wherein the processing element is adapted to include into the text element file context information comprising at least one of language identifiers and property keys.

27. Data processing unit of at least one of the claims 20 to 26, wherein the processing element is adapted to perform the linking operation during runtime execution of the software application.

28. Data processing unit of at least one of the claims 20 to 27, wherein the property code elements are constituted by JAVA properties and the property keys are constituted by JAVA property keys.

29. Data processing unit of at least one of the claims 20 to 28, wherein the processing element is adapted to start a mapping process for producing the localized version of the software application, in order to provide the localized version of the software application for the first language, the mapping process receiving the first language identifier as an input.

30. Data processing unit of claim 29, wherein the mapping process involves one of a compilation and an interpretation of the code.

31. Data processing unit of at least one of the claims 20 to 30, wherein the processing element is adapted to generate an input file including at least one of:

  - language identifiers;
  - file names of the localized version of the software application;
  - text elements in the first and second language; and
  - property keys associated with the text elements.

32. Data processing unit of at least one of the claims 22 to 31, wherein the processing element is adapted to obtain translated text elements by extracting relevant information from the text element file and by importing the information into a database; and by merging the translated text elements are back into the text element file.

33. Data processing unit of at least one of the claims 20 to 32, wherein the processing element is adapted to obtain the translated text elements using a web-based tool.

34. Data processing unit of at least one of the claims 22 to 33, wherein the text element file is constituted by an XML file and wherein generating the translated text elements includes an XML editor.

35. Data processing unit of at least one of the claims 22 to 34, wherein the text elements include at least one of:

  - menu items of a display screen;
  - text elements of a display screen;
  - a runtime message for a user;
  - help information;
  - installation information on the application program;
- language dependent symbols;
- language dependent formatting information;
- language dependent layout information; and
- language dependent code sections of the code.

**Patentansprüche**

1.  Verfahren zum Liefern lokalisierter Versionen einer Softwareanwendung mit Textelementen, das folgendes aufweist:

    Zugreifen (201) auf einen Code einer Softwareanwendung, mit einer Vielzahl von Textelementen in einer ersten Sprache verbunden ist;
    Erhalten (202) von Übersetzungen der Textelemente in einer zweiten Sprache;
    Verbinden (203) der Textelemente in der zweiten Sprache mit dem Code;
    Bewirken eines Lieferns lokalisierter Versionen der Softwareanwendung, einschließlich der folgenden Operationen:

       Erhalten (701) eines funktionellen Codeelements der Softwareanwendung, einschließlich eines Eigenschaftsschlüssels für jedes Textelements bei jeweils spezifizierten Stellen, wobei das funktionelle Codeelement einen Code ausschließlich Textelementen bildet;
       Erzeugen (702) eines ersten lokalisierten Eigenschafts-Codeelements mit den Textelementen in der Sprache und den Eigenschaftsschlüsseln in Verbindung mit den Textelementen;
       Erzeugen (702) eines zweiten lokalisierten Eigenschafts-Codeelements mit den Textelementen in der zweiten Sprache und den Eigenschaftsschlüsseln in Verbindung mit den Textelementen;
       Verknüpfen (703) des funktionellen Codeelements mit dem ersten lokalisierten Eigenschafts-Codeelement unter Verwendung eines ersten Sprachidentifizierers zum Liefern einer ersten lokalisierten Version der Softwareanwendung für die erste Sprache; und
       Verknüpfen (704) des funktionellen Codeelements mit dem zweiten lokalisierten Eigenschafts-Codeelement unter Verwendung eines zweiten Sprachidentifizierers zum Liefern einer zweiten lokalisierten Version der Softwareanwendung für die zweite Sprache.

2.  Verfahren nach Anspruch 1, wobei die Textelemente bei spezifizierten Positionen innerhalb einer Codedatei einschließlich des Codes geliefert werden und wobei die übersetzten Textelemente in der zweiten Sprache bei den Positionen der entsprechenden Textelemente in der ersten Sprache in die Codedatei gemischt werden.

3.  Verfahren nach wenigstens Anspruch 1, das ein Sammeln der Textelemente in der ersten Sprache und ein Speichern von ihnen in einer Textelementdatei enthält; und ein Mischen der übersetzten Textelemente in der zweiten Sprache in die Textelementdatei.

4.  Verfahren nach wenigstens einem der vorangehenden Ansprüche, wobei jedes Textelement in der ersten Sprache mit einer Stelle in dem Code mit einem einer Vielzahl von Eigenschaftsschlüsseln verknüpft wird.

5.  Verfahren nach Anspruch 4, das ein Verbinden der übersetzten Textelemente in der zweiten Sprache mit den Eigenschaftsschlüsseln der entsprechenden Textelemente in der ersten Sprache enthält.

6.  Verfahren nach wenigstens einem der vorangehenden Ansprüche, wobei die Textelemente in der ersten Sprache mit einem ersten Sprachidentifizierer verbunden werden und die Textelemente in der zweiten Sprache mit einem zweiten Sprachidentifizierer verbunden werden.

7.  Verfahren nach wenigstens einem der Ansprüche 3 bis 6, wobei die Textelementdatei Kontextinformation bzw. Zusammenhanginformation mit wenigstens einem von Sprachidentifizierern und Eigenschaftsschlüsseln enthält.

8.  Verfahren nach wenigstens einem der vorangehenden Ansprüche, wobei die Verknüpfungsoperation während einer Laufzeitausführung der Softwareanwendung durchgeführt wird.

9.  Verfahren nach wenigstens einem der vorangehenden Ansprüche, wobei die Eigenschafts-Codeelemente durch JAVA-Eigenschaften gebildet sind und die Eigenschaftsschlüssel durch JAVA-Eigenschaftsschlüssel gebildet sind.

10. Verfahren nach wenigstens einem der vorangehenden Ansprüche, wobei ein Liefern der lokalisierten Version der Softwareanwendung für die erste Sprache ein Beginnen eines Abbildungsprozesses zum Erzeugen der lokalisierten Version der Softwareanwendung enthält, wobei der Abbildungsprozess den ersten Sprachidentifizierer als Eingabe empfängt.

11. Verfahren nach Anspruch 10, wobei der Abbildungsprozess eines einer Kompilation und einer Interpretation des Codes enthält.

**12.** Verfahren nach wenigstens einem der vorangehenden Ansprüche, das ein Erzeugen einer Eingangsdatei enthält, die wenigstens eines von folgendem enthält:

- Sprachidentifizierer;
- Dateinamen der lokalisierten Version der Softwareanwendung;
- Textelemente in der ersten und der zweiten Sprache; und
- Eigenschaftsschlüssel, die mit den Textelementen verbunden sind bzw. zu diesen gehören.

**13.** Verfahren nach wenigstens einem der Ansprüche 3 bis 12, wobei ein Erhalten von Übersetzungstextelementen ein Extrahieren relevanter Information aus der Textelementdatei und ein Importieren der Information in eine Datenbank enthält; und die übersetzten Textelemente in die Textelementdatei zurück gemischt werden.

**14.** Verfahren nach wenigstens einem der vorangehenden Ansprüche, wobei ein Erhalten der übersetzten Textelemente ein Verwenden eines netzbasierenden Werkzeugs enthält.

**15.** Verfahren nach wenigstens einem der Ansprüche 3 bis 12, wobei die Textelementdatei durch eine XML-Datei gebildet wird und wobei ein Erzeugen der übersetzten Textelemente einen XML-Editor enthält.

**16.** Verfahren nach wenigstens einem der vorangehenden Ansprüche, wobei die Textelemente wenigstens eines von folgendem enthalten:

- Menüelemente eines Anzeigeschirms;
- Textelemente eines Anzeigeschirms;
- eine Laufzeitnachricht für einen Anwender;
- Hilfsinformation;
- Installationsinformation über das Anwendungsprogramm;
- sprachabhängige Symbole;
- sprachabhängige Formatierungsinformation;
- sprachabhängige Layoutinformation; und
- sprachabhängige Codeabschnitte des Codes.

**17.** Programm mit Anweisungen, die dazu geeignet sind, zu veranlassen, dass eine Datenverarbeitungseinrichtung alle Schritte des Verfahrens wenigstens eines der Ansprüche 1

- 16 ausführt.

**18.** Computerlesbares Medium, in welchem das Programm nach Anspruch 17 verkörpert ist.

**19.** Computerprogrammprodukt mit dem computerlesbaren Medium nach Anspruch 18.

**20.** Datenverarbeitungseinheit zum Liefern lokalisierter Versionen einer Softwareanwendung mit Textelementen, die folgendes aufweist:

eine Kommunikationseinrichtung (102) zum Zugreifen auf einen Code der Softwareanwendung, die mit einer Vielzahl von Textelementen in einer ersten Sprache verbunden ist, und zum Erhalten von Übersetzungen der Textelemente in einer zweiten Sprache; und
ein Verarbeitungselement (101) zum Bewirken einer Lieferung lokalisierter Versionen (141, 142) der Softwareanwendung, wobei das Verarbeitungselement geeignet ist, um:

ein funktionelles Codeelement der Softwareanwendung einschließlich eines Eigenschaftsschlüssels für jedes Textelement bei jeweils spezifizierten Stellen zu erhalten, wobei das funktionelle Codeelement einen Code ausschließlich Textelementen bildet;
ein erstes lokalisiertes Eigenschafts-Codeelement mit den Textelementen in der ersten Sprache und den Eigenschaftsschlüsseln in Verbindung mit den Textelementen zu erzeugen;
ein zweites lokalisiertes Eigenschafts-Codeelement mit den Textelementen in der zweiten Sprache und den Eigenschaftsschlüsseln in Verbindung mit den Textelementen zu erzeugen;
das funktionelle Codeelement mit dem ersten lokalisierten Eigenschafts-Codeelement unter Verwendung eines ersten Sprachidentifizierers zu verknüpfen, um eine Lieferung einer ersten lokalisierten Version der Softwareanwendung für die erste Sprache zu bewirken; und
das funktionelle Codeelement mit dem zweiten lokalisierten Eigenschafts-Codeelement unter Verwendung eines zweiten Sprachidentifizierers zu verknüpfen, um eine Lieferung einer zweiten lokalisierten Version der Softwareanwendung für die zweite Sprache zu bewirken.

**21.** Datenverarbeitungseinheit nach Anspruch 20, wobei die Textelemente bei spezifizierten Positionen innerhalb einer Codedatei vorgesehen sind, die den Code enthält, und wobei das Verarbeitungselement dazu geeignet ist, die übersetzten Textelemente in der zweiten Sprache in die Codedatei bei den Positionen der entsprechenden Textelemente in der ersten Sprache zu vermischen.

**22.** Datenverarbeitungseinheit nach Anspruch 20, wobei das Verarbeitungselement dazu geeignet ist, die Textelemente in der ersten Sprache zu sammeln und sie in einer Textelementdatei zu speichern; und wobei das Verarbeitungselement weiterhin dazu geeignet ist, die übersetzten Textelemente in der zweiten Sprache in die Textelementdatei zu vermischen.

**23.** Datenverarbeitungseinheit nach wenigstens einem der Ansprüche 20 bis 22, wobei das Verarbeitungselement dazu geeignet ist, jedes Textelement in der ersten Sprache mit einer Stelle in dem Code mit einem einer Vielzahl von Eigenschaftsschlüsseln zu verknüpfen.

**24.** Datenverarbeitungseinheit nach Anspruch 23, wobei das Verarbeitungselement dazu geeignet ist, die übersetzten Textelemente in der zweiten Sprache mit den Eigenschaftsschlüsseln der entsprechenden Textelemente in der ersten Sprache zu verknüpfen.

**25.** Datenverarbeitungseinheit nach wenigstens einem der Ansprüche 20 bis 24, wobei das Verarbeitungselement dazu geeignet ist, die Textelemente in der ersten Sprache mit einem ersten Sprachidentifizierer zu verbinden und die Textelemente in der zweiten Sprache mit einem zweiten Sprachidentifizierer.

**26.** Datenverarbeitungseinheit nach wenigstens einem der Ansprüche 22 bis 25, wobei das Verarbeitungselement dazu geeignet ist, in die Textelementdatei Kontextinformation bzw. Zusammenhanginformation mit wenigstens einem von Sprachidentifizierern und Eigenschaftsschlüsseln zu enthalten.

**27.** Datenverarbeitungseinheit nach wenigstens einem der Ansprüche 20 bis 26, wobei das Verarbeitungselement dazu geeignet ist, die Verknüpfungsoperation während einer Laufzeitausführung der Softwareanwendung durchzuführen.

**28.** Datenverarbeitungseinheit nach wenigstens einem der Ansprüche 20 bis 27, wobei die Eigenschafts-Codeelemente durch JAVA-Eigenschaften gebildet sind und die Eigenschaftsschlüssel durch JAVA-Eigenschaftsschlüssel gebildet sind.

**29.** Datenverarbeitungseinheit nach wenigstens einem der Ansprüche 20 bis 28, wobei das Verarbeitungselement dazu geeignet ist, einen Abbildungsprozess zum Erzeugen der lokalisierten Version der Softwareanwendung zu beginnen, um die lokalisierte Version der Softwareanwendung für die erste Sprache zur Verfügung zu stellen bzw. zu liefern, wobei der Abbildungsprozess den ersten Sprachidentifizierer als Eingabe empfängt.

**30.** Datenverarbeitungseinheit nach Anspruch 29, wobei der Abbildungsprozess eines einer Kompilation und einer Interpretation des Codes enthält.

**31.** Datenverarbeitungseinheit nach wenigstens einem der Ansprüche 20 bis 30, wobei das Verarbeitungselement dazu geeignet ist, eine Eingabedatei zu erzeugen, die wenigstens eines von folgenden enthält:

- Sprachidentifizierer;
- Dateinamen der lokalisierten Version der Softwareanwendung;
- Textelemente in der ersten und der zweiten Sprache; und
- Eigenschaftsschlüssel, die zu den Textelementen gehören.

**32.** Datenverarbeitungseinheit nach wenigstens einem der Ansprüche 22 bis 31, wobei das Verarbeitungselement dazu geeignet ist, übersetzte Textelemente zu erhalten, in dem relevante Information von der Textelementdatei extrahiert wird und in dem die Information in eine Datenbank importiert wird; und in dem die übersetzten Textelemente zurück in die Textelementdatei gemischt wird.

**33.** Datenverarbeitungseinheit nach wenigstens einem der Ansprüche 20 bis 32, wobei das Verarbeitungselement dazu geeignet ist, die übersetzten Textelemente unter Verwendung eines netzbasierenden Werkzeugs zu erhalten.

**34.** Datenverarbeitungseinheit nach wenigstens einem der Ansprüche 22 bis 33, wobei die Textelementdatei durch eine XML-Datei gebildet ist und wobei ein Erzeugen der übersetzten Textelemente einen XML-Editor enthält.

**35.** Datenverarbeitungseinheit nach wenigstens einem der Ansprüche 22 bis 34, wobei die Textelemente wenigstens eines von folgenden enthalten:

- Menüelemente eines Anzeigeschirms;
- Textelemente eines Anzeigeschirms;
- eine Laufzeitnachricht für einen Anwender;
- Hilfsinformation;
- Installationsinformation über das Anwendungsprogramm;
- sprachabhängige Symbole;
- sprachabhängige Formatierungsinformation;
- sprachabhängige Layoutinformation; und
- sprachabhängige Codeabschnitte des Codes.

**Revendications**

**1.** Procédé pour prévoir des versions localisées d'une application logicielle avec des éléments de texte, comprenant les étapes consistant à :

accéder (201) à un code de l'application logicielle associée à une pluralité d'éléments de texte dans un premier langage ;
obtenir (202) les traductions des éléments de texte dans un second langage ;
associer (203) les éléments de texte dans le second langage avec le code ;
effectuer la fourniture des versions localisées de l'application logicielle incluant les opérations consistant à :

obtenir (701) un élément de code fonctionnel de l'application logicielle incluant une clé de propriété pour chaque élément de texte à des emplacements respectivement spécifiés, l'élément de code fonctionnel constituant le code à l'exclusion des éléments de texte ;
générer (702) un premier élément de code de propriété localisé comprenant les éléments de texte dans le premier langage et les clés de propriété en association avec les éléments de texte ;
générer (702) un second élément de code de propriété localisé comprenant les éléments de texte dans le second langage et les clés de propriété en association avec les éléments de texte ;
relier (703) l'élément de code fonctionnel au premier élément de code de propriété localisé en utilisant un premier identificateur de langage pour fournir une première version localisée de l'application logicielle pour le premier langage ; et
relier (704) l'élément de code fonctionnel au second élément de code de propriété localisé en utilisant un second identificateur de langage pour fournir une seconde version localisée de l'application logicielle pour le second langage.

2. Procédé selon la revendication 1, dans lequel les éléments de texte sont prévus à des positions spécifiées à l'intérieur d'un fichier de code incluant le code et dans lequel les éléments de texte traduits dans le second langage sont regroupés dans le fichier de code aux positions des éléments de texte correspondants dans le premier langage.

3. Procédé selon au moins la revendication 1, incluant la collecte des éléments de texte dans le premier langage et leur stockage dans un fichier d'élément de texte ; et le regroupement des éléments de texte traduits dans le second langage dans le fichier d'élément de texte.

4. Procédé selon au moins l'une des revendications précédentes, dans lequel chaque élément de texte dans le premier langage est lié à un emplacement dans le code avec l'une d'une pluralité de clés de propriété.

5. Procédé selon la revendication 4, incluant l'association des éléments de texte traduits dans le second langage avec les clés de propriété des éléments de texte correspondants dans le premier langage.

6. Procédé selon au moins l'une des revendications précédentes, dans lequel les éléments de texte dans le premier langage sont associés avec un premier identificateur de langage et les éléments de texte dans le second langage sont associés avec un second identificateur de langage.

7. Procédé selon au moins l'une des revendications 3 à 6, dans lequel le fichier d'élément de texte inclut les informations de contexte comprenant au moins l'un des identificateurs de langage et des clés de propriété.

8. Procédé selon au moins l'une des revendications précédentes, dans lequel l'opération de liaison est exécutée pendant l'exécution du module d'exécution de l'application logicielle.

9. Procédé selon au moins l'une des revendications précédentes, dans lequel les éléments de code de propriété sont constitués par les propriétés de JAVA et les clés de propriété sont constituées par les clés de propriété de JAVA.

10. Procédé selon au moins l'une des revendications précédentes, dans lequel le fait de fournir la version localisée de l'application logicielle pour le premier langage implique le commencement d'un processus de mappage pour produire la version localisée de l'application logicielle, le processus de mappage recevant le premier identificateur de langage comme entrée.

11. Procédé selon la revendication 10, dans lequel le processus de mappage implique l'une d'une compilation et d'une interprétation du code.

12. Procédé selon au,moins l'une des revendications précédentes,
incluant le fait de générer un fichier d'entrée incluant au moins l'un des :

- identificateurs de langage ;
- noms de fichier de la version localisée de l'application logicielle ;
- éléments de texte dans le premier langage et dans le second langage ; et

- clés de propriété associées aux éléments de texte.

**13.** Procédé selon au moins l'une des revendications 3 à 12, dans lequel le fait d'obtenir la traduction des éléments de texte inclut l'extraction des informations appropriées du fichier d'élément de texte et l'importation des informations dans une base de données ; et les éléments de texte traduits sont regroupés à nouveau dans le fichier d'élément de texte.

**14.** Procédé selon au moins l'une des revendications précédentes, dans lequel le fait d'obtenir les éléments de texte traduits inclut l'utilisation d'un outil basé sur le Web.

**15.** Procédé selon au moins l'une des revendications 3 à 12, dans lequel le fichier d'élément de texte est constitué par un fichier XML et dans lequel la génération des éléments de texte traduits inclut un éditeur XML.

**16.** Procédé selon au moins l'une des revendications précédentes, dans lequel les éléments de texte incluent au moins l'un des :

- éléments de menu d'un écran de visualisation ;
- éléments de texte d'un écran de visualisation ;
- un message de durée d'exécution pour un utilisateur;
- informations d'aide ;
- informations d'installation sur le programme application ;
- symboles dépendant du langage ;
- informations de formatage dépendant du langage ;
- informations de mise en page dépendant du langage ; et
- sections de code du code dépendant du langage.

**17.** Programme ayant des instructions adaptées pour faire qu'un moyen de traitement de données exécute toutes les étapes du procédé d'au moins l'une des revendications 1 à 16.

**18.** Support lisible par un ordinateur, dans lequel le programme selon la revendication 17 est intégré.

**19.** Produit de programme informatique comprenant le support lisible par un ordinateur selon la revendication 18.

**20.** Unité de traitement de données pour fournir des versions localisées d'une application logicielle avec des éléments de texte, comprenant :

un moyen de communication (102) pour accéder à un code de l'application logicielle associée à une pluralité d'éléments de texte dans un premier langage et pour obtenir les traductions des éléments de texte dans un second langage ; et un élément de traitement (101) pour effectuer la fourniture des versions localisées (141, 142) de l'application logicielle, l'élément de traitement étant adapté pour :

obtenir un élément de code fonctionnel de l'application logicielle incluant une clé de propriété pour chaque élément de texte à des emplacements respectivement spécifiés, l'élément de code fonctionnel constituant un code à l'exclusion des éléments de texte ;
générer un premier élément de code de propriété localisé comprenant les éléments de texte dans le premier langage et les clés de propriété en association avec les éléments de texte ;
générer un second élément de code de propriété localisé comprenant les éléments de texte dans le second langage et les clés de propriété en association avec les éléments de texte ;
relier l'élément de code fonctionnel au premier élément de code de propriété localisé en utilisant un premier identificateur de langage pour effectuer la fourniture d'une première version localisée de l'application logicielle pour le premier langage ; et
relier l'élément de code fonctionnel au second élément de code de propriété localisé en utilisant un second identificateur de langage pour effectuer la fourniture d'une seconde version localisée de l'application logicielle pour le second langage.

**21.** Unité de traitement de données selon la revendication 20, dans laquelle les éléments de texte sont prévus à des positions spécifiées à l'intérieur d'un fichier de code incluant le code et dans laquelle l'élément de traitement est adapté pour regrouper les éléments de texte traduits dans le second langage dans le fichier de code aux positions des éléments de texte correspondants dans le premier langage.

**22.** Unité de traitement de données selon la revendication 20, dans laquelle l'élément de traitement est adapté pour collecter les éléments de texte dans le premier langage et pour les stocker dans un fichier d'élément de texte ; et dans laquelle l'élément de traitement est, en outre, adapté pour regrouper les éléments de texte traduits dans le second langage dans le fichier d'élément de texte.

**23.** unité :de traitement de données selon au moins l'une des revendications 20 à 22, dans laquelle l'élément de traitement est adapté pour relier chaque élément de texte dans le premier langage à un emplacement dans le code avec l'une d'une pluralité de clés de propriété.

24. Unité de traitement de données selon la revendication 23, dans laquelle l'élément de traitement est adapté pour relier les éléments de texte traduits dans le second langage aux clés de propriété des éléments de texte correspondants dans le premier langage.

25. Unité de traitement de données selon au moins l'une des revendications 20 à 24, dans laquelle l'élément de traitement est adapté pour associer les éléments de texte dans le premier langage avec un premier identificateur de langage et les éléments de texte dans le second langage avec un second identificateur de langage.

26. Unité de traitement de données selon au moins l'une des revendications 22 à 25, dans laquelle l'élément de traitement est adapté pour inclure dans le fichier d'élément de texte les informations de contexte comprenant au moins l'un des identificateurs de langage et des clés de propriété.

27. Unité de traitement de données selon au moins l'une des revendications 20 à 26, dans laquelle l'élément de traitement est adapté pour effectuer l'opération de liaison pendant la durée de l'exécution de l'application logicielle.

28. Unité de traitement de données selon au moins l'une des revendications 20 à 27, dans laquelle les éléments de code de propriété sont constitués par les propriétés de JAVA et les clés de propriété sont constituées par les clés de propriété de JAVA.

29. Unité de traitement de données selon au moins l'une des revendications 20 à 28, dans laquelle l'élément de traitement est adapté pour commencer un processus de mappage pour produire la version localisée de l'application logicielle afin de fournir la version localisée de l'application logicielle pour le premier langage, le processus de mappage recevant le premier identificateur de langage comme entrée.

30. Unité de traitement de données selon la revendication 29, dans laquelle le processus de mappage implique l'une d'une compilation et d'une interprétation du code.

31. Unité de traitement de données selon au moins l'une des revendications 20 à 30, dans laquelle l'élément de traitement est adapté pour générer un fichier d'entrée incluant au moins l'un des :

- identificateurs de langage ;
- noms de fichier de la version localisée de l'application logicielle ;
- éléments de texte dans le premier langage et dans le second langage ; et
- clés de propriété associées aux éléments de texte.

32. Unité de traitement de données selon au moins l'une des revendications 22 à 31, dans laquelle l'élément de traitement est adapté pour obtenir les éléments de texte traduits en extrayant les informations appropriées du fichier d'élément de texte et en important les informations dans une base de données ; et en regroupant les éléments de texte traduits qui sont à nouveau dans le fichier d'élément de texte.

33. Unité de traitement de données selon au moins l'une des revendications 20 à 32, dans laquelle l'élément de traitement est adapté pour obtenir les éléments de texte traduits en utilisant un outil basé sur le Web.

34. Unité de traitement de données selon au moins l'une des revendications 22 à 33, dans laquelle le fichier d'élément de texte est constitué par un fichier XML et dans laquelle la génération des éléments de texte traduits inclut un éditeur XML.

35. Unité de traitement de données selon au moins l'une des revendications 22 à 34, dans laquelle les éléments de texte incluent au moins l'un des :

- éléments de menu d'un écran de visualisation ;
- éléments de texte d'un écran de visualisation ;
- un message de durée d'exécution pour un utilisateur;
- informations d'aide ;
- informations d'installation sur le programme application ;
- symboles dépendant du langage ;
- informations de formatage dépendant du langage ;
- informations de mise en page dépendant du langage ; et
- sections de code du code dépendant du langage.

Fig. 1

START

ACCESS CODE OF A SOFTWARE
APPLICATION ASSOCIATED WITH A
PLURALITY OF TEXT ELEMENTS IN A
FIRST LANGUAGE
201

OBTAIN TRANSLATIONS OF THE
TEXT ELEMENTS IN A SECOND
LANGUAGE
202

ASSOCIATE THE TEXT ELEMENTS IN
THE SECOND LANGUAGE WITH THE
CODE (E.G. SOURCE CODE)
203

A

PROVIDE A FIRST LOCALIZED
VERSION OF THE SOFTWARE
APPLICATION FOR THE FIRST
LANGUAGE AND A SECOND
LOCALIZED VERSION OF THE
SOFTWARE APPLICATION FOR THE
SECOND LANGUAGE BASED ON THE
SOURCE CODE ASSOCIATED WITH
THE TEXT ELEMENTS IN THE FIRST
AND SECOND LANGUAGE.
204

END

Fig. 2

START

OBTAIN SOURCE CODE FILE
INCLUDING THE CODE — 301

PROVIDE/EXTRACT A PLURALITY OF
TEXT ELEMENTS IN A FIRST
LANGUAGE AT SPECIFIED
LOCATIONS IN THE CODE FILE — 302

OBTAIN TRANSLATIONS OF THE
TEXT ELEMENTS IN A SECOND
LANGUAGE — 303

MERGE TEXT ELEMENTS IN THE
SECOND LANGUAGE INTO THE
CODE FILE AT THE POSITIONS OF
THE CORRESPONDING TEXT
ELEMENTS IN THE FIRST
LANGUAGE. — 304

PROVIDE LOCALIZED VERSIONS OF
THE SOFTWARE APPLICATION — 305

END

Fig. 3

START

OBTAIN CODE FILE INCLUDING THE
SOURCE CODE ASSOCIATED WITH
A PLURALITY OF TEXT ELEMENTS IN
A FIRST LANGUAGE — 401

COLLECT TEXT ELEMENTS IN THE
FIRST LANGUAGE IN A TEXT
ELEMENT FILE — 402

OBTAIN TRANSLATIONS OF THE
TEXT ELEMENTS IN A SECOND
LANGUAGE — 403

MERGE TEXT ELEMENTS IN THE
SECOND LANGUAGE INTO THE
TEXT ELEMENT FILE. — 404

PROVIDE LOCALIZED VERSIONS OF
THE SOFTWARE APPLICATION — 405

END

Fig. 4

START

COLLECT TEXT ELEMENTS IN THE
FIRST LANGUAGE IN A TEXT
ELEMENT FILE AND ASSOCIATE
WITH LANGUAGE ID OF FIRST
LANGUAGE

501

ASSOCIATE EACH TEXT ELEMENT IN
THE FIRST LANGUAGE IN THE TEXT
ELEMENT FILE WITH A POSITION IN
THE SOURCE CODE USING
LOCATION KEYS.

502

OBTAIN TRANSLATIONS OF THE
TEXT ELEMENTS IN A SECOND
LANGUAGE

503

MERGE TEXT ELEMENTS IN THE
SECOND LANGUAGE INTO THE
TEXT ELEMENT FILE.

504

ASSOCIATE THE TEXT ELEMENTS IN
THE SECOND LANGUAGE WITH THE
LOCATION KEYS OF THE
CORRESPONDING TEXT ELEMENTS
IN THE FIRST LANGUAGE.

505

ASSOCIATE EACH TEXT ELEMENT IN
THE SECOND LANGUAGE WITH A
LANGUAGE ID FOR THE SECOND
LANGUAGE

506

PROVIDE LOCALIZED VERSIONS OF
THE SOFTWARE APPLICATION

507

END

Fig. 5

(A)

START MAPPING PROCESS —— 601

ACCESS TEXT ELEMENT FILE / CODE WITH TEXT ELEMENTS IN A PLURALITY OF LANGUAGES —— 602

FIRST/NEXT LANGUAGE ID AVAILABLE ? —— 603

NO → END

YES

TEXT ELEMENTS CORRESPONDING TO LANGUAGE ID AVAILABLE? —— 604

NO → SELECT FALLBACK LANGUAGE IDENTIFIER —— 608

YES

PROVIDE LANGUAGE IDENTIFIER OF DESIRED VERSION OF THE SOFTWARE APPLICATION AS INPUT —— 605

COMPILE AND/OR INTERPRETE THE CODE. —— 606

STORE VERSION OF APPLICATION PROGRAM —— 607

Fig. 6

(A)

OBTAIN A FUNCTIONAL CODE
ELEMENT OF THE SOFTWARE
APPLICATION INCLUDING A
PROPERTY KEY FOR EACH TEXT
ELEMENT AT RESPECTIVELY
SPECIFIED LOCATIONS
701

GENERATE A FIRST AND SECOND
LOCALIZED PROPERTY CODE
ELEMENT COMPRISING THE TEXT
ELEMENTS IN THE FIRST AND
SECOND LANGUAGE AND THE
PROPERTY KEYS IN ASSOCIATION
WITH THE TEXT ELEMENTS
702

LINK THE FUNCTIONAL CODE
ELEMENT WITH THE FIRST
LOCALIZED PROPERTY CODE
ELEMENT USING A FIRST
LANGUAGE IDENTIFIER
703

LINK THE FUNCTIONAL CODE WITH
THE SECOND LOCALIZED
PROPERTY CODE ELEMENT USING
A SECOND LANGUAGE IDENTIFIER.
704

Fig. 7

800

| PK1 | TE1 (L1) | 810 |
| PK2 | TE2 (L1) | 811 |
| PK3 | TE3 (L1) | 812 |

PK1
PK2
PK3

830

ID1
/
ID2

| PK1 | TE1 (L2) | 820 |
| PK2 | TE2 (L2) | 821 |
| PK3 | TE3 (L2) | 822 |

Fig. 8

TRANSFER TEXT ELEMENTS INTO
DATABASE
901

OBTAIN TRANSLATED TEXT
ELEMENTS USING A WEB-BASED
TOOL
902

MERGE THE TRANSLATED TEXT
ELEMENTS INTO THE DATABASE
903

PROVIDE LOCALIZED VERSIONS OF
THE SOFTWARE APPLICATION
904

Fig. 9

Fig. 10

Fig.11a

Fig. 11b

Start ~100

extract text elements from source code ~102

extract text elements from software related text ~122

Searching untranslated text elements from said extracted text elements ~104

Searching untranslated text elements from said extracted text elements ~124

Retrieving translation elements for each untranslated text element ~106

150

Retrieving translation elements for each untranslated text element 126

Associating the translation elements with the extracted text elements ~108

Associating the translation elements with the extracted text elements ~128

Can translation element be validated? 110    No

request user input of a valid translation element 116

No    Can translation element be validated? 130

Yes

merge validated translation elements with source code ~112

Yes

exchange software related text elements with validated translation elements ~132

compile merged source code to a localized software version ~114

End ~190

Fig. 12

52

searching untranslated text elements in the software related text 2

data-base 6

retrieving translation elements for each untranslated text element 4

associating said untranslated text elements of said software related text with said retrieved translation elements 8

10

## Fig. 13a

software related text 610

600

component for searching 602

component for retrieving 604

data-base 6

component for associating 606

## Fig. 13b

Fig. 14

110, 130

116

Validating a translation
element as a matching
translation of a text
element by user input

112, 132

Generating a preliminary ID number
for the text element and its validated
matching translation element

200

Transferring said identified text and
translation element pair to said
database 150

202

Analyzing said text and translation
element pair to generate a new key
ID

204

Storing said element pair with said
newly generated key ID

206

# Fig. 15

| Key-ID | Language | Text | Synonym |
|--------|----------|------|---------|
| 1 | 1 | table | desk |
| 1 | 49 | Tisch | Schreibtisch |
| 2 | 1 | table | chart |
| 2 | 49 | Tabelle | Verzeichnis |
| 3 | 1 | table | board |
| 3 | 49 | Tafel | Brett |
| 4 | 1 | table | plain (geol.) |
| 4 | 49 | Plateau | Ebene |
| 5 | 1 | table | (opt.) |
| 5 | 49 | Bildebene | (opt.) |

# Fig. 16

| Key-ID | Language | Text | Status / Quality |
|--------|----------|------|------------------|
| 1 | 1 | The computer is standing on the table. | Untranslated |
| 1 | 1 | The computer is standing on the table. | 100% |
| 1 | 1 | The computer is standing on the table ？ | 97% |
| 1 | 1 | ☐ computer is standing on the table. | 95% |
| 1 | 1 | ☐ computer is standing on☐ table. | 84% |

Selecting the bold lined table element by user input.

| Key-ID | Language | Text | Status |
|--------|----------|------|--------|
| 1 | 1 | The computer is standing on the table. | Untranslated |
| 1 | 1 | The computer is standing on the table. | 100% |
| 1 | 49 | Der Computer steht auf dem Tisch. | 100% |

Selecting the bold lined table element by user input.

| Key-ID | Language | Text | Status |
|--------|----------|------|--------|
| 1 | 49 | Der Computer steht auf dem Tisch. | Fully translated |

# Fig. 17a

| user | computer | database |
|------|----------|----------|

S1
untranslated text
language 1

retrieving

S3
related elements
(language 1)

S5
preparing
list and entries

receiving

S7
selecting of
an entry

S6
showing list of
related elements

retrieving

S9
selected item
related element
(language 49)

S11
preparing
list and entries

receiving

S13
selecting of
an entry

S12
showing list of
related element

S14
translated text

time

Fig. 17b

| Key-ID | Language | Text | Status / Quality |
|---|---|---|---|
| 1 | 1 | The computer is standing on the table. | Untranslated |
| 1 | 1 | *A keyboard* is standing on the table. | 66% |
| 1 | 1 | *There is a keyboard* standing on the table? | 61% |

Selecting the bold lined table element by user input.

| Key-ID | Language | Text | Status |
|---|---|---|---|
| 1 | 1 | The computer is standing on the table. | Untranslated |
| 1 | 1 | *A keyboard* is standing on the table. | 66% |
| 1 | 49 | *Eine Tastatur* steht auf dem Tisch. | 66% |

Editing the suggested translation by user input.

| Key-ID | Language | Text | Status |
|---|---|---|---|
| 1 | - | *THE COMPUTER* steht auf dem Tisch. | Partially Translated 66% |

Selecting the dotted bold lined table element for next smaller text elements by user input.

| Key-ID | Language | Text | Status |
|---|---|---|---|
| 127 | - | *THE COMPUTER* steht auf dem Tisch | Partially Translated 66% |
| 127 | 1 | The computer | 100% |
| 127 | 49 | Der Computer | 100% |

Accepting or editing the translation suggestion by user input

| Key-ID | Language | Text | Status |
|---|---|---|---|
| 1 | 49 | Der Computer steht auf dem Tisch. | Fully translated |

Transferring the new translations to the database

| Key-ID | Language | Text | Status |
|---|---|---|---|
| 114115 | 49 | Der Computer steht auf dem Tisch. | |
| 114115 | 1 | The computer is standing on the table. | |

# Fig. 18a

| user | computer | database |
|------|----------|----------|

S20 — untranslated text language 1 — retrieving →

S22 — related elements (language 1) — receiving ←

S24 — preparing list and entries

S26 — selecting of an entry → S25 — showing list of related elements — retrieving →

S28 — entry related element (language 49) — receiving ←

S30 — preparing list and entries

S32 — selecting of an entry → S31 — showing list of related element

S34 — selecting of an entry → S33 — untraslated part language 1 — retrieving →

S35 — related elements (language 1, 49) — receiving ←

S37 — preparing list and entries

S39 — selecting of an entry → S38 — showing list of related element

S40 — translated text — transmit →

S42 — new entry

time ↓

## Fig. 18b

Fig. 19

Fig. 20

Fig. 21